(19) Europäisches Patentamt
European Patent Office
Office européen des brevets

(11) EP 2 265 685 B1

(12) # EUROPÄISCHE PATENTSCHRIFT

(45) Veröffentlichungstag und Bekanntmachung des Hinweises auf die Patenterteilung:
**14.11.2012 Patentblatt 2012/46**

(21) Anmeldenummer: **09733091.4**

(22) Anmeldetag: **11.04.2009**

(51) Int Cl.:
***C09J 5/08*** (2006.01)
***C04B 24/16*** (2006.01)
***C08G 18/10*** (2006.01)
***C08G 18/32*** (2006.01)
***C08G 18/66*** (2006.01)
***C08G 18/76*** (2006.01)
***C09J 175/04*** (2006.01)
***C04B 26/10*** (2006.01)
***C09D 5/34*** (2006.01)
***F16B 13/14*** (2006.01)

(86) Internationale Anmeldenummer:
**PCT/EP2009/002690**

(87) Internationale Veröffentlichungsnummer:
**WO 2009/127374 (22.10.2009 Gazette 2009/43)**

(54) **VERWENDUNG DEFINIERTER KUNSTHARZE BEIM BEFESTIGEN VON SCHRAUBEN UND ÄHNLICHEN VERANKERUNGSMITTELN, ENTSPRECHENDE VERFAHREN UND KUNSTHARZE**

USE OF DEFINED SYNTHETIC RESINS FOR FASTENING SCREWS AND SIMILAR ANCHORING MEANS, ASSOCIATED METHODS AND SYNTHETIC RESINS

UTILISATION DE RÉSINES DÉFINIES LORS DE LA FIXATION DE VIS, DE MOYENS D'ANCRAGE ET SIMILAIRES, PROCÉDÉ CORRESPONDANT ET RÉSINE SYNTHÉTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.04.2008 DE 102008018861**

(43) Veröffentlichungstag der Anmeldung:
**29.12.2010 Patentblatt 2010/52**

(73) Patentinhaber: **Fischerwerke Gmbh & Co. Kg**
**72178 Waldachtal (DE)**

(72) Erfinder:
- **GRÜN, Jürgen**
  **79268 Bötzingen (DE)**
- **VOGEL, Martin**
  **79286 Glottertal (DE)**
- **SCHLENK, Christian**
  **79211 Denzllingen (DE)**

(56) Entgegenhaltungen:
**DE-A1-102006 036 438**

EP 2 265 685 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft die Verwendung (mindestens) eines flüssigen bis pastösen, im Rahmen der Verwendung aushärtenden Mehrkomponenten-Kunstharzsystems zur Fixierung von Befestigungselementen in einem Substrat, hierfür geeignete neue Mehrkomponenten-Kunstharzsysteme, entsprechende Mehrkomponenten-Kunstharzsysteme und/oder Verfahren zur Fixierung von Befestigungselementen, welche die genannte Verwendung umfassen.

Es sind eine Reihe von Ein- oder Mehrkomponentensystemen bekannt, welche härtbare Kunstharze oder Kunstharzmassen beinhalten, die in Löcher, beispielsweise Bohrlöcher, eingebracht werden und in die während des Aushärtens Befestigungselemente, z.B. Verankerungselemente, wie Bolzen, eingebracht werden, solange die härtbaren Kunstharzmischungen noch plastisch oder flüssig sind, so dass die Verankerungselemente nach dem Aushärten im jeweiligen Loch befestigt sind. Ebenfalls bekannt sind Schaumstoffsysteme, die z.B. zum Ausfüllen von Hohlräumen oder zum Herstellen von Formkörpern geeignet sind.

Bei bekannten Befestigungsmitteln für Verankerungsmittel wie Bolzen, Schrauben oder Nägeln oder alternativ oder ergänzend ferner Ankerstangen mit Gewinde gibt es jedoch eine Reihe von Problemen, die dazu führen, dass diese nicht brauchbar sind für die Anwendung unter Einbringen einer entsprechenden (Kunst-)Mörtelmasse z.B. in ein Loch und anschließendem Einbringen bzw. Eintreiben (z.B. Einschrauben) des Verankerungsmittels in die harte oder zumindest angehärtete Masse. Bei üblichen nicht-schäumenden, ohne kompressible Zusätze versehenen Kunstmörteln finden sich zwar hohe Auszugskräfte in Vollbaustoffen und Mauerwerk, aber die benötigten Eindrehmomente beispielsweise für Schrauben sind inakzeptabel hoch oder das Einbringen der Befestigungselemente ist nur in die ungehärtete Masse möglich. Bei thermoplastischen Kunststoffen wie Hotmelts (Heißklebern) lassen sich mäßige Zugkräfte und brauchbare Eindrehmomente realisieren, doch sind die Produkte nicht hitzestabil, weisen eine schlechte Leistungsfähigkeit unter Dauerbelastung auf (Kriechen) und es werden Energiezufuhr und eine Erhitzungsvorrichtung benötigt. Bei klassischen Polyurethanschäumen, bei denen die Volumenzunahme typischerweise das 30- oder 40-fache des ungeschäumten Volumens der Vorstufen betragen kann, ist zwar ein leichtes Einbringen möglich, doch lassen sich nur vollkommen unbrauchbar geringe Auszugkräfte finden, die Verankerungsmittel können also nicht stabil befestigt werden.

Eine Reihe von Dokumenten aus dem Stand der Technik vermitteln Ansätze für die Befestigung von Verankerungsmitteln. Die GB 2 207 726 beispielsweise beschreibt - inhaltlich wenig konkret und ohne Beispiele - Schäume, welche in Löcher eingebracht werden können und in denen dann Befestigungsmittel angebracht werden können. Dort findet sich jedoch kein konkretes chemisches Beispiel, die Härtung soll 1 bis 7 Tage oder mehr dauern, was unzumutbar lange ist. Die US 2,110,053 erwähnt einen Pfropfen ("Plug"), der nach Mischen außerhalb eines Loches und Formgebung in das Loch eingebracht werden kann und dann dort seine Festigkeit durch Zement erhalten soll, mit Mehl als Bindemittel, solange noch keine vollständige Härtung eingetreten ist. Die DE 102004035567 nennt härtbare chemische Zweikomponenten-Mörtel, ohne jedoch ein rasches System zur Verfügung zu stellen. Komprimierbarkeit wird nicht erwähnt. Die DE 198 52 720 nennt ebenfalls die Verwendung von Zweikomponenten-Systemen zur Befestigung von Schrauben etc., doch ist, wie auch bei der zuvor genannten offenlegung, keine Komprimierbarkeit genannt und die Verankerungsmittel werden wie oben in die noch flüssigpastöse Masse eingebracht. Die Aushärtezeiten liegen bei 0,5 Stunden. Die DE 44 38 577 nennt Dübelmassen, die eine Art lagerstabile Knetmasse darstellen. Diese können (vorzugsweise zylindrisch) vorgeformt in ein Bohrloch eingesetzt werden, beim Einbringen des Verankerungsmittels werden dann Härter freigesetzt und bewirken eine Aushärtung. Die DE 41 39 09 nennt das Binfüllen von Metallspänen in Bohrlöcher und die Befestigung von Verankerungsmitteln darin mittels chemischer Harze in Form knetbarer Massen, bei denen die Erhärtungszeit bei 2 bis 5 Stunden liegt. Ein Lösen und Ausdrehen des Befestigungaelementes und eine Wiederbelegung ist bzw. sind bisher nirgendwo vorgesehen. DB 102006036438 offenbart die Verwendung von Zwei-Komponenten-Polyurethanmassen zum Befestigen von Verankerungsmitteln.

Insbesondere bei großen und/oder unregelmäßigen Bohrlöchern ist eine Schwierigkeit, dass die verwendeten Harze während des Härtungsvorgangs aus den Löchern auslaufen können. Auch kann es bei ungleichmäßig geformten Löchern schwierig sein, die Wandungen des Lochs hinreichend gleichmäßig mit der verwendeten Masse zu benetzen und/oder die Löcher aufzufüllen. Schließlich kann es bei größeren Löchern, die deutlich größere Durchmesser haben als die einzubringenden Befestigungselemente, zu Schwierigkeiten kommen, ein Befestigungselement an der richtigen Stelle zu platzieren, beispielsweise zu zentrieren, da die Harze vor dem Aushärten noch eine Bewegung (beispielsweise ein Abeinken in Richtung der Schwerkraft) des Befestigungselements erlauben.

Die Verwendung von Fertigdübeln, wie insbesondere Spreizdübeln oder Universaldübeln, erfordert andererseits gut an die Dübelform angepasste Bohrlöcher, da sonst der nötige Halt nicht zustande kommt, oder kompliziertere Dübelkonstruktionen. Weiterhin ist es bei der Verwendung von Fertigdübeln erforderlich, dass die Außendurchmesser der Schrauben und die Innendurchmesser der Dübel eng aufeinander abgestimmt sind, so dass es an Flexibilität mangelt, wenn beispielsweise zueinander passende Bohrer, Dübel und Schrauben nicht verfügbar sind.

Bekannt sind beispielsweise auch Thermoplaste, die etwa mittels Heißkleberpistolen in Löcher eingebracht werden können und in die anschließend Schrauben eingedreht werden können (vgl. das Gebrauchsmuster DE 296 17 234). Hier ist jedoch ein relativ hoher apparativer Aufwand erforderlich, und es sind hohe Temperaturen notwendig, um

die Befestigungsmasse einzubringen, ja sogar ein Vorwärmen von beispielsweise einzubringenden Schrauben ist erforderlich. Bei hohen Umgebungstemperaturen (z.B. in heißen Ländern oder bei intensiver Sonneneinstrahlung) können Heißkleber ungeeignet sein, da sie schmelzen. Vielfach zeigen sich außerdem schlechte Eigenschaften unter Dauerlast wegen Kriechens.

Das Dokument DE10 2006 036 438 A1 offenbart die Verwendung von Kunstharzen beim Befestigen von Schrauben und ähnlichen Verankerungsmitteln. Die Beispiele 3 und 8 von DE10 2006 036 438 A1 beschreiben Zweikomponenten-Polyurethan-Massen, die ein verdrängbares Volumen von 33% aufweisen. Die Gelzeit kann laut Absatz [0034] der Beschreibung 60 Sekunden betragen. Allerdings offenbart die Druckschrift DE10 2006 036 438 A1 weder die mittlere Viskosität noch den Vernetzungsindex. Außerdem wird der Thixotropieindex bei den Beispielen 2-8 von der DE10 2006 036 438 A1 nicht erwähnt.

Es besteht vor diesem Hintergrund die Aufgabe, neue Systeme zur Befestigung von Befestigungselementen in Löchern zu finden, die es ermöglichen, Löcher beliebiger Form rasch für das Einbringen von Befestigungselementen vorzubereiten und auf einfache Weise die Fixierung solcher Befestigungselemente zu ermöglichen, insbesondere unter möglichst gleichmäßiger Benetzung der Wandungen und Ausfüllung der verwendeten Löcher durch das verwendete mörtelartige System, unter Gestattung eines einfachen und präzisen Platzierens von verwendeten Befestigungselementen und/oder ohne dass es etwa zu einem Auslaufen einer für die Vorbereitung des Einbringens der Befestigungselemente verwendeten Masse kommt. Ferner soll es ermöglicht werden, eine erhöhte Flexibilität bezüglich der verwendeten Befestigungselemente zu gewährleisten, beispielsweise ohne das Erfordernis einer Abstimmung von Durchmessern von Bohrern, Schrauben und Fertigdübeln. Weitere Vorteile sind, dass Befestigungselemente lösbar und wieder ausdrehbar sind, und das oder die betreffenden Löcher so wiederbelegbar sind.

Die Lösung für ein oder mehrere Aspekte dieser Aufgabe besteht in einer eingangs genannten Verwendung, welche dadurch gekennzeichnet ist, dass ein bei Umgebungstemperatur ohne aktives Erwärmen über die Umgebungstemperatur flüssiges bis pastöses mehrkomponenten-Kunstharzsystem nach oder während des Mischens seiner Komponenten (auch hier ohne zusätzliches (aktives) Erwärmen) in mindestens ein Loch des Substrates, optional. mit Siebhülse); das Loch vorzugsweise ganz ausfüllend) eingebracht wird, gewartet wird, bis es dort (mindestens hinreichend) (aus-)gehärtet ist und dann mindestens ein Befestigungselement in die (mindestens hinreichend) (aus-)gehärtete resultierende (also verfestigte) Kunstharzmasse eingetrieben wird, wobei die nach dem Mischen resultierende Masse (insbesondere im ausgehärteten Zustand) ein verdrängbares (komprimierbares) Volumen von 0,1 bis 40 Vol.-% durch komprimierbare Zusätze, bei denen das verdrängbare Volumen dem er umschlossenen Hohlräume entspricht und/oder im Falle einer

Schaumstruktur bestimmt, indem ein definiertes Volumen aus einer Mehrkammerkartusche bei einer konstanten Kolbenvorschubgeschwindigkeit von 150 mm/min bei 23 °C und 50 % relativer Luftfeuchte über einen statischen Mischer in einen Kunststoffbecher gepresst wird und nach der Aushärtung das Volumen des Prüfkörpers mittels einer Tauchwägung ermittelt und die Volumenzunahme relativ zum Ausgangsvolumen berechnet und so bestimmt wird; eine Gelzeit von 5 bis 65 Sekunden, insbesondere von unter 60 Sekunden, wie von 5 bis 58 Sekunden, jeweils bestimmt mittels 5-g-Ansätzen durch Bereitstellen aller Komponenten im entsprechenden Volumenverhältnis in einem Einmalkunststoffbecher und bei manuellem Durchmischen mit einem Holzspatel, wobei die Gelzeit hier als die Zeit vom Beginn des Durchmischens bis zum sprunghaften anstieg der Viskosität, bei welcher der Spatel nicht mehr von Hand in der Masse bewegt werden kann, definiert ist; und vor dem Aushärten eine (aus den Viskositäten der gewichteten Komponenten durch Mitteln errechnete) mittlere Viskosität von 1000 Pa·s oder niedriger aufweist - wobei eine der Komponenten des Mehrkomponenten-Kunstharzsystems eine Viskosität von mindestens 30 Pa·s aufweist -, wobei die mittlere Viskosität jeweils nach DIN EN ISO 2555 mit einem Brookfield DV-III+-Viskosimeter mit Spindel 7 bei 10 Umdrehungen/Minute (U/min) bei 23 ° C gemessen und in Pa·s angegeben wird; und eine Thixotropie mit einem Thixotropieindex (errechnet aus den gewichteten Thixotropieindices der Komponenten durch Mitteln, also der Lage "ohne" beginnendes Aushärten entsprechend) im Bereich von 4 bis 10 aufweist, welcher durch Bestimmung der Viskositäten der Komponenten wie im vorstehenden Absatz bei 1 und 10 U/min des Viskosimeters und Bildung des Koeffizienten aus den so erhaltenen Viskositäten bei 1 und 10 U/min, gefolgt von der Bildung des Mittelwertes für alle Komponenten, gewichtet nach deren relativem Volumenanteil an der resultierenden Mischung vor einem eventuellen Aufschäumen nach dem Vermischen der Komponenten bestimmt wird; sowie im ausgehärteten Endzustand eine vernetzungsdichte basierend auf einem Vernetzungsindex von 2,3 bis 10, bestimmt nach folgender Gleichung:

$$I_V = \frac{\Sigma(n_i(A_i) \cdot f_i)}{\Sigma(n_i(A_i))} \qquad \text{(Gleichung A)}$$

worin

- $A_i$ die Art der jeweiligen an einer Polymerisation teilnehmenden Gruppe einer Komponente,
- $n_i$ die Stoffmenge (Anzahl) der entsprechenden Gruppen des Moleküls i des Gesamtsystems und
- $f_i$ die jeweilige, bei Gemischen gegebenenfalls mittlere, Funktionalität der reaktiven Moleküle unter Berücksichtigung der Anzahl der Reaktionsmöglichkeiten mit einem potentiellen Reaktionspartner, bedeuten, wobei jeweils vorausgesetzt ist, dass bei 2-oder Mehrkomponentensystemen stöchiometrische Verhältnisse der Komponenten vorliegen, so dass die Menge überschüssiger reaktiver Gruppen einer Komponente nicht um mehr als 10 % von der stöchiometrisch richtigen Menge abweichen sollte und wobei vollständige Umsetzung angenommen wird;

aufweist; bzw. einem diese Verwendung beinhaltender. Verfahren zur Fixierung von Befestigungselementen sowie ein entsprechendes Mehrkomponenten-Kunstharzsystem.

In einer anderen bevorzugten Ausführungsform der ansonsten im letzten Absatz beschriebenen Verwendung beträgt die Gelzeit 180 Sekunden oder weniger, z.B. 60 (oder insbesondere mehr als 60) bis 120 Sekunden.

Die Vorteile dieser erfir-dungsgemäßen Vorgehensweise liegen auf der Hand: Die flüssige bis (vorzugsweise) pastöse Konsistenz direkt nach dem Mischen der verwendeten Kunstharzsystem-Komponenten erlaubt einen guten Kontakt mit den Seiten- und Rückwänden eines Loches und ein einfaches Einbringen in ein Loch. Nicht erwünschte (z.B. aus dem Loch überstehende) Bereiche können vor dem Aushärten durch Abstreifen (beispielsweise mittels eines Spachtels oder dergleichen) und/oder danach (beispielsweise durch Polieren, Schleifen, schneiden) entfernt werden, was auch Bestandteil einer bevorzugten erfindungsgemäßen Verwendung sein kann. Die Befestigungselemente können exakt platziert werden, sofern sie am Umfang Gewinde haben durch Drehen, sonst z.B. durch Schlagen oder Drücken oder entsprechende Maßnahmen, auch bei größeren Löchern, wie sie beispielsweise auch bei versehentlichem Ausschlagen oder Ausreißen von Wandputz oder anderen Substraten, in welchen das oder die Löcher vorliegen, entstanden sein können. Weiter ist es nicht, wie etwa bei Fertigdübeln und Schrauben, notwendig, den Bohrlochdurchmesser, den Innendurchmesser der Dübel und den Außendurchmesser der Befestigungselemente (z.B. Schrauben) aufeinander abzustimmen, so dass ein großes Maß an Flexibilität bezüglich der verwendbaren Bohr- und Befestigungsmittel erreicht werden kann. Ein Verzicht auf (passende) Fertigdübel ist möglich, und auch in schwierigen oder heterogenen Untergründen und bei unregelmäßiger Lochform kann eine gute Befestigung der Befestigungselemente erreicht werden.

Erstmals wird erreicht, dass ein System zur Verfügung gestellt wird, bei dem tatsächlich ein Einbringen eines Verankerungsmittels in die gleich nach dem Mischen bereits eine gewisse Härtung aufweisende Masse ermöglicht wird mit sehr rascher Belastbarkeit des eingebrachten Verankerungsmittels, ohne dass längere Wartezeiten in Kauf genommen werden müssen.

Auch kann die Nützlichkeit erfindungsgemäß definierter Mehrkomponenten-Kunstharzsysteme unabhängig von der Art der zugrundeliegenden Chemie bzw. chemischen Zusammensetzung belegt werden.

Hervorzuheben ist, dass es sich bei den Mehrkomponenten-Kunstharzsystemen um solche handelt, deren Aushärtung nicht in erster Linie durch Aushärtung mineralischer Komponenten, wie Zement, gebrannter Kalk, Gips in Anhydridform oder dergleichen, sondern durch Polyreaktion (Oberbegriff für Polymerisation, Polykondensation und Polyaddition - bei der Polyreaktion werden Monomere zu Makromolekülen verknüpft) von organischen Verbindungen zustande kommt. Allerdings sind auch Zusätze solcher aushärtungsbefähigter anorganischer/mineralischer Materialien möglich, wie unten noch näher ausgeführt wird, wobei jedoch das Fehlen derartiger Komponenten eine bevorzugte Ausführungsform der Erfindung darstellt.

Die nachfolgenden spezifischeren Definitionen geben Details zu bereits genannten Parameterbestimmungen oder sonst bevorzugte Varianten der mit ihnen näher definierten Begriffe wieder und können unabhängig voneinander einzeln oder zu mehreren oder zu allen solche allgemeineren Begriffe (auch in den Ansprüchen) ersetzen, was jeweils zu bevorzugten Ausführungsformen der Erfindung führt.

Bei den nachfolgenden Methoden werden die Versuche bei 23 °C oder den jeweils spezifisch angegebenen Temperaturen durchgeführt.

Ein verdrängbares Volumen von 0,1 bis 40 Vol.-% bedeutet, dass durch geeignete komprimierbare Zusätze, wie kompressibler Füllstoffe oder -materialien, z.B. gasgefüllte Partikel, wie gasgefüllte Plastikpartikel (z.B. Expancel® der Firma AkzoNobel), Glashohlkugeln, Schaumstoffpartikel, wie (mindestens teil-) expandiertes Polystyrol, andere umschlossene Hohlkörper oder Hohlräume oder dergleichen formende Hohlkörper, wie keramische Strukturen, ferner auch Holz, bei denen das verdrängbare Volumen dem der umschlossenen Hohlräume entspricht, und/oder durch Erzeugen einer Schaumstruktur (Aufschäumen des Gemisches der Komponenten) beim Mehrkomponenten-Kunststoffsystem, ein beispielsweise beim Einbringen eines Verankerungselements in dessen Nähe verdrängbares Volumen von 0,1 bis 40 Vol.-% des ausgehärteten Materials vorliegt. In einer bevorzugten Ausführungsform der Erfindung wird das verdrängbare Volumen durch ein oder mehrere kompressible Füllstoffe alleine oder deren Kombination mit dem Erzeugen einer Schaumstruktur erzielt. In einer alternativen bevorzugten Ausführungsform wird das verdrängbare Volumen allein durch Erzeugen einer gewünschten Schaumstruktur erzielt.

Im Falle des in einer Variante der Erfindung bevorzugten Aufschäumens dient die Volumenzunahme als Maß für das verdrängbare Volumen, die wie folgt ermittelt wird:

Zur Bestimmung der Volumenzunahme wird ein definiertes Volumen von z.B. 5,80 ml aus einer Mehrkammerkartusche bei einer konstanten Kolbenvorschubgeschwindigkeit von 150 mm/min bei 23 °C und 50 % relativer Luftfeuchte über einen statischen Mischer in einen Kunststoffbecher gepresst. Nach der Aushärtung wird das Volumen des Prüfkörpers mittels einer Tauchwägung ermittelt und die Volumenzunahme relativ zum Ausgangsvolumen berechnet und so bestimmt.

Bei Materialien mit Hohlanteilen wird das verdrängbare Volumen aus dem Gesamtvolumen der umschlossenen Hohlräume ermittelt.

Darüber liegende verdrängbare Volumina führen in der Regel zu mangelnder Auszugsfestigkeit und ggf. niedrigen Auszugskräften, darunter liegende bedingen in der Regel zu hohe Kräfte für das Einbringen von Verankerungselementen.

Die Gelzeit in Sekunden wird mittels 5-g-Ansätzen durch Bereitstellen aller (z.B. beider) Komponente im entsprechenden Volumenverhältnis (z.B. 1:1 für alle Komponenten) in einem Einmalkunststoffbecher und bei manuellem Durchmischen mit einem Holzspatel bestimmt. Die Gelzeit ist hier definiert als die Zeit vom Beginn des Durchmischens bis zum sprunghaften Anstieg der Viskosität, bei welcher der Spatel nicht mehr von Hand in der Masse bewegt werden kann. Sie liegt vorzugsweise bei 5 bis 65 Sekunden, inbesondere unter 60 Sekunden, kann aber in anderen vorteilhaften Ausführungsformen der Erfindung auch 180 Sekunden oder weniger, z.B. 60 (oder insbesondere mehr als 60) bis 120 Sekunden, betragen, was weniger zeitlich gedrängtes Arbeiten ermöglicht.

Viskositäten werden nach DIN EN ISO 2555 mit einem Brookfield DV-III+-Viskosimeter mit Spindel 7 bei 10 Umdrehungen/Minute (U/min) bei 23 ° C gemessen und in Pa·s (nachfolgend auch als Pa · s oder Pas wiedergegeben) angegeben .

Eine Viskosität von 30 mPa·s in einer der Komponenten stellt vernünftige Handhabbarkeit sicher.

Die mittlere Viskosität eines erfindungsgemäßen bzw. erfindungsgemäß verwendbaren Mehrkomponenten-Kunstharzsystems kann vorteilhafterweise bei 30 bis 1000, vorzugsweise bei 30 bis 500 Pa.s, liegen, insbesondere bei 30 bis 250, beispielsweise bei 30 bis 220 Pa.s.

Es hat sich für die Abtropfsicherheit - beispielsweise beim Arbeiten über Kopf oder bei Verwendung von Siebhülsen - gezeigt, dass ein Thixotropieindex unter 4, vorteilhaft unter 5, besser vermieden wird, um ein Heruntertropfen auf eine Person und/oder ein Abtropfen aus einer Siebhülse zu verhindern.

Überraschend wurde gefunden, dass beispielsweise die für die Funktion des Systems benötigte gute Balance aus Auspresskraft, Fließfähigkeit und Standfestigkeit des Materials erreicht wird, wenn die mittlere Viskosität eines erfindungsgemäßen bzw. erfindungsgemäß verwendbaren Mehrkomponenten-Kunstharzsystems vorteilhafterweise bei 30 bis 1000, vorzugsweise bei 30 bis 500 Pa.s liegt, insbesondere bei 30 bis 250, beispielsweise bei 30 bis 220 Pa.s, eine Komponente dabei eine Mindestviskosität von 30 Pa·s aufweist und ein Thixotriopieindex zwischen 4 und 10, vorzugsweise zwischen 5 und 10, insbesondere zwischen 5,5 und 8, beispielsweise zwischen 6 und 7,5, erreicht wird.

Der Thixotropieindex wird ermittelt durch Bestimmung der Viskositäten der Komponenten (z.B. a) und b) wie unten definiert, ggf. c) bei einem Dreikomponentensystem) wie im vorstehenden Absatz bei 1 und 10 U/min des Viskosimeters und Bildung des Koeffizienten aus den so erhaltenen Viskositäten bei 1 und 10 U/min, gefolgt von der Bildung des Mittelwertes (= der Thixotropieindex) für alle Komponenten, gewichtet nach deren relativem Volumenanteil an der resultierenden Mischung (vor einem eventuellen Aufschäumen) nach dem Vermischen der Komponenten (d.h. nach der Formel $\Sigma(V_i \cdot TI_i)/\Sigma(V_i)$, worin $V_i$ jeweils das Volumen einer Komponente (z.B. in ml) ist, TI der für die jeweilige Komponente gemessene Viskositätsindex.

Bei vorteilhaften Varianten des erfindungsgemäßen bzw. erfindungsgemäß verwendbaren Mehrkomponenten-Kunstharzsystems kann der Thixotropieindex zwischen 5 und 10, insbesondere zwischen 5,5 und 8, beispielsweise zwischen 6 und 7,5, liegen.

Es wurde gefunden, dass die erfindungsgemäße Aufgabe gelöst werden kann, wenn die Vernetzungsdichte für das ausgehärtete Produkt auf einem Vernetzungsindex im Bereich von 2,3 oder höher basiert, wobei der Vernetzungsindex $I_v$ nach folgender Formel ermittelt wird:

$$I_v = \frac{\Sigma(n_i(A_i) \cdot f_i)}{\Sigma(n_i(A_i))} \qquad \text{(Gleichung A)}$$

worin

- $A_i$ die Art der jeweiligen an einer Polymerisation teilnehmenden Gruppe einer Komponente (z.B. a), b), ggf. c)) bedeutet, z.B. -OH, -SH, $-NH_2$ (Funktionalität mit Epoxiden 2, mit Isocyanaten vereinfachend 1), -NCO, -NCS, $-CH{=}CH_2$, - C $(CH_3)$ $=CH_2$,

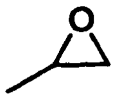

oder dergleichen,

- $n_i$ die Stoffmenge (Anzahl) der entsprechenden Gruppen des Moleküls i des Gesamtsystems ist und
- $f_i$ die jeweilige (bei Gemischen gegebenenfalls mittlere) Funktionalität der reaktiven Moleküle unter Berücksichtigung der Anzahl der Reaktionsmöglichkeiten mit einem potentiellen Reaktionspartner (siehe oben Beispiel $-NH_2$) ist,

wobei jeweils vorausgesetzt ist, dass bei 2- oder Mehrkomponentensystemen stöchiometrische Verhältnisse der Komponenten (z.B. a): b) bei einem Zwei-Komponentensystem) vorliegen, so dass erfindungsgemäß die Menge überschüssiger reaktiver Gruppen einer Komponente vorzugsweise nicht um mehr als 10 % von der stöchiometrisch richtigen Menge abweichen sollte, vorzugsweise um weniger als 10 %, noch bevorzugter um weniger als 0,5 %, und wobei vollständige Umsetzung angenommen wird. Möglich ist auch eine Homo- oder Copolymerisation (z.B. radikalische Reaktion) einer Komponente, ausgelöst durch eine oder weitere Komponenten.

Der Vernetzungsindex $I_v$ ist somit eine dimensionslose Kennziffer und gibt nur eine mittlere Zahl an. Ist $I_v = 2$ oder niedriger, so liegen nur lineare Polymere vor, ist $I_v$ größer als 2, so beginnt die Vernetzung zu Duroplasten, wie sie erfindungsgemäß vorausgesetzt ist, um eine hohe Dauerbeständigkeit (geringe Kriechneigung) und Temperaturbeständigkeit (z.B. im Unterschied zu "Hotmelts" wie Heißklebern) zu gewährleisten.

Der Vernetzungsindex ist somit weiter auch eine theoretisch bestimmte (mittlere) Größe, die aus den Daten $A_i$, $n_i$ und $f_i$ oder entsprechenden Angaben für die (z.B. mit entsprechenden Angaben käuflichen oder nach üblichen dem Fachmann bekannten Methoden zur Bestimmung von reaktiven Gruppen wie z.B. die OHZ oder der NCO-Gehalt ermittelbaren) Edukte ermittelt wird.

Für den (beispielhaft bevorzugbaren) Spezialfall eines Zwei-Komponenten-Systems mit

(i) ein oder mehreren Epoxiden, Di- und/oder Polyepoxiden,
(ii) ein oder mehreren Di- und/oder Polyisocyanaten,
(iii) ein oder mehreren Di- und/oder Polyisocyanaten,
(iv) ein oder mehreren Di- und/oder Polyisocyanaten oder
(v) ein oder mehreren mono-, di- oder polyfunktionellen (Meth)acrylaten

als Komponente a) wie unten definiert und

im Falle von (i) für die Herstellung von Epoxidpolymeren ein- oder mehreren di- und/oder polyfunktionellen Amino- und/oder Mercaptoverbindungen,
im Falle von (ii) für die Herstellung von Polyurethanen ein oder mehreren Di- und/oder Polyolen,
im Falle von (iii) für die Herstellung von Polyharnstoffen ein oder mehreren Di- und/oder Polyaminen,
im Falle von (iv) für die Herstellung von Polyurethan/Polyharnstoff-Mischpolymeren ein oder mehreren di- und/oder polyfunktionellen Amino-, Hydroxy- und/oder Amino- und Hydroxyverbindungen (worunter vor- und nachstehend Aminoalkohole zu verstehen sind), oder
im Falle von (v) für die Herstellung von Poly(meth)acrylaten ein Initiator, insbesondere ein Radikalstarter, z.B. ein Diacylperoxid,, als Polymerisationsstarter,für Komponente b), wie unten näher definiert,
kann das Vernetzungsvermögen (hier mit dem Vernetzungsgrad gleichgesetzt) der umsetzbaren Verbindungen der Komponenten a) und b) beispielsweise über den Vernetzungsindex wie folgt berechnet werden, wobei bei primären Aminogruppen (im Gegensatz zu sekundären Aminogruppen) in Komponente b) über die Funktionalität zu berücksichtigen ist, dass je Gruppe beispielsweise bei der Umsetzung mit Epoxiden zwei reaktive Wasserstoffatome vorliegen können und wobei die zur Reaktion mit den reaktiven Gruppen in Komponente a) befähigten Gruppen (OH, $NH_2$) als zur Reaktion mit den reaktiven Gruppen (Epoxy- oder Isocyanatgruppen) der Komponente b) äquivalent und in stöchiometrischer Menge vorliegend betrachtet werden können, wie nachfolgend für die Hydroxylzahl dargelegt:

$$I_v = \frac{\Sigma\ (w_i \cdot Z_i \cdot f_i)}{\Sigma\ (w_i \cdot Z_i)} \qquad \textbf{(Gleichung B)}$$

wenn man mit $w_i$ die Masseanteile aller Verbindungen, die zur Reaktion mit der Epoxy- oder Isocyanatgruppe befähigte

Wasserstoffatome tragen (im Falle der Epoxy- oder Isocyanatgruppen werden diese für die nachfolgende Rechnung als äquivalent je einer solche Wasserstoffatome tragenden Gruppe eingesetzt), mit $Z_i$ die Hydroxylzahl, entsprechend der Menge KOH in mg/g, welche chemisch der Aktivität eines Gramms der jeweiligen Edukte gleichzusetzen ist, aller Verbindungen, die zur Reaktion mit der Epoxy- oder Isocyanatgruppe befähigte Wasserstoffatome tragen bzw. bei den Epoxy- oder Isocyanatgruppen der entsprechend errechnete Wert, und $f_i$ die Funktionalitäten aller Verbindungen, die zur Reaktion mit der Epoxy- oder Isocyanatgruppe befähigte Gruppen tragen,
wobei (wie unten in den Beispielen durchgeführt) anstelle der "OCN"- oder "Epoxid"-Mol-Menge bei den Isocyanat- oder Epoxyverbindungen die äquivalente (fiktive) Hydroxylzahl eingesetzt wird (als Beispiel: 1 Mol OCN z.B. entspricht 42,0 g, 1 mol KOH 56,1 g, mithin entspricht beispielsweise einer Molmenge von 1 mMol OCN pro g Edukt eine Hydroxylzahl von 56,1 mg KOH/g , die statt der Molmenge OCN eingesetzt werden kann). Bei anderen Komponenten (z.B. Wasser) kann die OH-Zahl entsprechend ermittelt werden.

In obiger Gleichung B wird davon ausgegangen, dass in die Komponenten die reaktiven Komponenten aller Stoffe eingehen.

Bei radikalisch härtenden Systemen bleibt der Initiator jedoch bei der Berechnung unberücksichtigt.

Erfindungsgemäß liegt der Vernetzungsindex insbesondere zwischen 2,3 und 10, vorzugsweise bei 2,4 bis 5, oder ebenfalls vorzugsweise zwischen 2,6 und den vorstehend genannten drei oberen Werten, insbesondere den bevorzugteren. Es hat sich gezeigt, dass in diesen bevorzugten Bereichen eine besonders geringe Kriechneigung bei Dauerstandsveruchen bei gleichzeitig guter Eindrehbarkeit des Verankerungselements gefunden wird. Dauerstandsversuche können nach der vorliegenden Offenbarung durchgeführt werden, indem die Komponenten eines Mehr (insbesondere Zwei)-Komponenten-Kunstharzsystems in ein sehr gut gereinigtes Bohrloch der Abmessungen 10 mm (Durchmesser) x 50 mm (Bohrlochtiefe), welches in Beton eingebracht ist, mittels einer entsprechenden Mehrkammerkartusche mit Statikmischer eingebracht werden. Nach einer Aushärtezeit von 5 min wird in die Kunstharzmasse eine Schneidschraube (5 x 70 mm, SPAX® der Firma Altenloh, Brinck & Co-Gruppe, Ennepetal, Deutschland) 45 mm tief eingeschraubt. Anschließend wird über ein Hebelsystem eine Dauerlast von 20 % der Maximallast aufgebracht und die Verschiebung am Schraubenkopf als Funktion der Zeit gemessen. Ein System gilt als dauerstandfest, wenn die Verschiebung nach einer tolerierbar niedrigen Anfangsverschiebung asymptotisch gegen einen tolerierbaren Grenzwert läuft, also bezogen auf die Zeit keine unbegrenzte (beispielsweise lineare) Verschiebbarkeit gegeben ist.

Bei dem Verfahren im vorstehenden Absatz kann eine gute (bereichsweise etwa lineare) Korrelation zwischen dem Vernetzungsindex und der Dauerbelastbarkeit ermittelt werden.

Damit kann belegt werden, dass der Vernetzungsindex ein geeignetes Maß für die. Dauerbeständigkeit und Kriechfestigkeit darstellt.

Ein erfindungsgemäßes bzw. erfindungsgemäß verwendbares Mehrkomponenten-Kunstharzsystem weist vorteilhaft zusätzlich zu den oben einleitend genannten und ggf. ein oder mehreren der weiteren als vorteilhaft genannten Eigenschaften im ausgehärteten Zustand ein Eindrehmoment von 9 Nm oder weniger, besonders vorteilhaft im Bereich von 2 bis 8 Nm, insbesondere von 2,5 bis 7,5 Nm auf. Die Bestimmung des Eindrehmoments erfolgt dabei nach einer Aushärtezeit von 5 min mittels eines Drehmomentaufnehmers, der entweder mit einem Akku-Schrauber oder einem Schraubendreher kombiniert wird, beim Eindrehen einer Schneidschraube (5 x 70 mm, SPAX® der Firma Altenloh, Brinck & Co.-Gruppe; Ennepetal, Deutschland) bei Eindrehtiefen von 40 mm bis 45 mm.

Ein erfindungsgemäßes bzw. erfindungsgemäß verwendbares Mehr-komponenten-Kunstharzsystem weist vorteilhaft zusätzlich zu den oben einleitend genannten und ggf. ein oder mehreren der weiteren als vorteilhaft genannten Eigenschaften ein Ablaufverhalten derart auf, dass im Siebhülsentest kein Abtropfen der Masse nach dem Mischen vor dem Aushärten stattfindet. Zur Bestimmung dieses Parameters wird in eine waagrecht fixierte Siebhülse SH 10 x 45 (fischerwerke GmbH & Co KG, Waldachtal, Deutschland) ein Volumen von 4,5 ml aus einer Mehr(z.B. Zwei)-Kammerkartusche über einen Statikmischer bei Raumtemperatur (23 °C) eingespritzt. Tropft die Masse vor der Aushärtung nicht ab, so ist der Test bestanden.

Alternativ oder ergänzend sollte vorzugsweise ein "Sagging" (Ablaufen) von unter 2 mm der entsprechenden Mischung gefunden werden, insbesondere im Bereich von 0 bis 1 mm, vorzugsweise von 0 bis 0,5 mm, bei folgendem Test: 1 g der Masse wird aus der Mehr(z.B. Zwei)-Kammerkartusche über einen Statikmischer auf eine kreisrunde Markierung (Durchmesser 0,85 mm) auf einem Papier aufgebracht und senkrecht gestellt. Zur Beurteilung des Ablaufverhaltens (Sagging) bei Raumtemperatur (23 °C) wird die Distanz zwischen dem unteren Rand der Markierung und dem unteren Ende des Tropfens in Millimetern gemessen.

"Im Rahmen der Verwendung (aus-)härtend" bedeutet insbesondere vor und ggf. auch endgültig weiter während und nach der Fixierung eines bzw. mehrerer Befestigungselemente aushärtend.

Substrate sind in erster Linie von (mindestens hinreichend) fester Konsistenz und können beliebiger Art sein und aus beliebigen Stoffen oder Materialien bestehen; es kann sich beispielsweise um Wände, Decken, Mauerwerk, Beton, Böden, Verputze oder andere Beschichtungen, Holz, Kunststoffe, Glas oder dergleichen handeln. "Fixierung in einem Substrat" bedeutet insbesondere, dass mindesten ein Teil des Befestigungselements, das von außen noch zugänglich bleibt, nach der Fixierung unterhalb der äußeren (der Seite des Einbringens des Befestigungselements zugewandten) Oberfläche des Substrates liegt. Ein Loch des Substrates ist eine Aushöhlung oder dergleichen, das von der äußeren Oberfläche des Substrates unterhalb dieser Oberfläche reicht und beliebig geformt (z.B. rund, unregelmäßig, eckig) und auf beliebige Weise hergestellt (z.B. durch Bohren, Ausstechen, Ausheben) oder bereits vorhanden sein kann, z.B. als Lücke oder dergleichen.

"Im Rahmen der Verwendung aushärtend" bedeutet insbesondere, dass nach dem Mischen der Komponenten und dem Einbringen eines Mehrkomponenten-Kunstharzsystems in eines oder mehrere Löcher im Rahmen der erfindungsgemäßen Verwendung eine Aushärtung (Polyreaktion und Vernetzung) eines solche Komponenten beinhaltenden Mehrkomponentensystems stattfindet.

Unter erfindungsgemäß zu verwendenden Befestigungselementen sind z.B. Verankerungselemente, wie beispielsweise solche mit Außengewinden im Bereich der Befestigung im erhärteten erfindungsgemäßen Kunstharzsystem, die ein Eindrehen (Einschrauben) ermöglichen, z.B. Schrauben, oder Haken oder Ösen mit Gewinden, insbesondere Holzschrauben (= Schrauben zum Einderhen in Holz), Schneidschrauben oder Blechschrauben, d.h., insbesondere solche Schrauben, die sich während der Drehung beim Eintreiben ihr Gewinde im Material selbst schneiden können, insbesondere solche, die am kopfabgewandten Ende (beispielsweise kegelförmig) zugespitzt sind; oder ferner im Bereich der Befestigung im erhärteten erfindungsgemäßen Kunstharzsystem eine glatte Oberfläche aufweisende, nicht durch Drehen, sondern durch Eintreiben zu befestigende Befestigungselemente, wie Nägel bis hin zu Krampen oder Befestigungsklammern (die beispielsweise mit Tackern eingebracht werden können), Reißzwecken oder dergleichen zu verstehen.

Unter erfindungsgemäß zu verwendenden Mehrkomponenten-Kunstharzsystemen sind allgemein zwei oder mehr nach einem Mischen miteinander eine Aushärtung bewirkend reaktive bzw. reagierende, insbesondere vor dem Mischen nicht oder nur so langsam, dass Lagerfähigkeit ohne Aushärtung gewährleistet ist, aushärtende Komponenten beinhaltende Systeme zu verstehen, deren Komponenten (als solche oder durch Bestandteile darin) nach dem Mischen ein Aushärten (Polymerisieren, unter Vernetzung) bewirken, vorzugsweise solche, die mehrere, insbesondere zwei bis drei, unter Aushärtung und gegebenenfalls Aufschäumen miteinander reaktive Komponenten (bzw. Bestandteile in solchen Komponenten) beinhalten.

Da im Rahmen der vorliegenden Offenbarung und mittels der darin gezeigten Methoden und Parameter gezeigt werden kann, dass beliebige Mehrkomponenten-Kunstharzsysteme, die auf entsprechende Parameter eingestellt werden, anwendbar sind, ist die Art der Komponenten solcher Systeme nicht beschränkt.

Beispiele für mögliche bevorzugte vor oder beim Einbringen an dem oder den gewünschten Löchern durch Mischung von zwei oder mehr nach einem Mischen eine Aushärtung bewirkend reaktiven (bzw. reagierenden) Komponenten beinhaltende Systeme sind insbesondere Mehr-, insbesondere Drei- oder vor allem Zweikomponentensysteme, wie z.B. in der nachfolgenden Tabelle genannt, welche jeweils mindestens einen der ebenfalls nachfolgend genannten reaktiven Bestandteile in den Komponenten (a), (b) und gegebenenfalls (c) umfassen, wobei z.B. noch eine weitere Komponente vorgesehen sein kann:

| Mehrkomponenten-Kunstharzsystem | reaktiver Bestandteil in Komponente (a) | reaktiver Bestandteil in Komponente (b) | reaktiver Bestandteil in Komponente (c) (falls vorhanden) |
|---|---|---|---|
| Epoxidharz | Di- und/oder multifunktionelles Epoxid | di- und/oder polyfunktionelle Amino-, Mercapto und/oder Aminound Mercaptoverbindungen | - |
| Polyurethan | Di- und/oder Polyisocyanat (ggf. auch als Präpolymer) | Di- und/oder Polyole | - |
| Polyamin | mono-, di- oder polyfunktionelle s (Meth) acrylat | di- und/oder polyfunktionelle Aminoverbindungen | |
| In situ hergestelltes Acrylpolyurethan* | Hydroxyacrylat und/oder Hydroxymethacrylat | (insbesondere radikalischer) Härter (z.B. Benzoylperoxid) | Di- und/ oder Polyisocyanate (ggf. auch als Präpolymer) |

(fortgesetzt)

| Mehrkomponenten-Kunstharzsystem | reaktiver Bestandteil in Komponente (a) | reaktiver Bestandteil in Komponente (b) | reaktiver Bestandteil in Komponente (c) (falls vorhanden) |
|---|---|---|---|
| radikalisch härtbare Harze (außer Acrylylpolyurethan) | Epoxyacrylat), Epoxymethacrylat, Vinylesterharze, Urethanacrylate und/ oder Urethanmethacrylate und/ oder, ungesättigte Polyesterharze, Polyethylenoxidester oder Polyamid, das/ die jeweils härtbare (insbesondere olefinische) Gruppen, z.B. Vinylgruppen, beinhalten. | (insbesondere radikalischer) Härter (z.B. Benzoylperoxid) | - |
| Polyharnstoff | Di- und/oder Polyisocyanat (ggf. auch als Präpolymer), Diund/ oder Polyamin | Di- und/oder Polyamin | - |
| Polyurethan/Poly harnstoffmischprodukt | Di- und/oder Polyisocyanat (ggf. auch als Präpolymer), Diund/ oder Polyamin | Organische Amino, Hydroxy- und/oder Amino- und Hydroxyverbindungen mit der Maßgabe, dass sowohl Amino- als auch Hydroxygruppen vorhanden sind | - |
| Mehrkomponenten-System auf Basis alkoxysilanter-minierter Präpolymeren | alkoxysilan-terminiertes Präpolymer[1], falls für entsprechendes Hart-Schaumstoffsystem weiter beinhaltend ein oder mehrere Ammonium- und/ oder Metallcarbonate, z.B. Natrium- oder Kaliumcarbonat | Wasser und/oder organische oder anorganische Säure(n), z.B. Schwefel-, Salz-, Phosphor- oder Polyphosphorsäure, Mono- oder Di- oder Polycarbonsäuren, wie Essigsäure, Trifluoressigsäure, Fumarsäure, Maleinsäure, Citronensäure oder dergleichen, oder organische Sulfon- oder Phosphonsäuren. | - |

[1]) Als alkoxysilanterminierte Präpolymere sind durch Umsetzung mit a-Aminosilanen herstellbare, wie sie beispielsweise in der (hier erneut bezüglich der Verbindungen (Verbindungsklassen und Einzelverbindungen) und deren Herstellung durch Bezugnahme aufgenommenen) Patentschriften WO 2004/00214, WO 2004/005156 und/ oder WO 2005/000931 genannt sind, besonders bevorzugt - sehr bevorzugt sind (insbesondere ein mit der CAS-Nr. 611222-18-5 zugänglicher) Dimethoxy(methyl)silylmethylcarbamat- oder -harnstoffterminierter Polyether oder dimethoxy(methyl)silylmethyl-carbamat-terminierte Oligo- oder Polyurethan-Derivate

Besonders bevorzugt sind Mehrkomponenten-Kunstharzsysteme, wie auch deren erfindungsgemäße Verwendung, in Form eines Zweikomponentensystems, bei denen es sich um ein Polyurethan-, ein Polyharnstoff- oder ein Polyharnstoff/ Polyurethanbasiertes System, handelt, vorzugsweise mit

(i) ein oder mehreren Di- und/oder Polyisocyanaten als Komponente a) und für die Herstellung von Polyurethanen ein oder mehreren Di- und/oder Polyolen als Komponente b);
(ii) ein oder mehreren Di- und/oder Polyisocyanaten als Komponente a) und für die Herstellung von Polyharnstoffen ein oder mehreren Di- und/oder Polyaminen als Komponente b); oder (iii) ein oder mehreren Di- und/oder Polyisocyanaten als Komponente a) und für die Herstellung von Polyurethan/Polyharnstoff-Mischpolymeren ein oder mehreren di- und/oder polyfunktionellen Amino-, Hydroxy- und/oder Amino- und Hydroxyverbindungen als Komponente b); wobei ein Polyurethansystem besonders bevorzugt ist.

Die für beispielsweise Polyurethane, Polyharnstoffe und Polyurethan/Polyharnstoff-Mischpolymere erforderlichen Polyole, Polyamine, Polymercaptane und Polyaminoalkohole bzw. Isocyanate sind bekannt, beispielsweise entsprechen sie den in der WO 02/079341 und der WO 02/079293 genannten Di-oder höherwertigen Alkoholen, Mercaptanen, Aminen usw., bzw. Di-oder Polyisocyanaten, so dass diese Anmeldungen hier diesbezüglich durch Bezugnahme aufgenommen werden.

Wo in der Tabelle oder in der Beschreibung von den entsprechenden "Di- und oder Poly"-Verbindungen die Rede ist, können stets auch Mono-Verbindungen anteilig vorhanden sein, die jedoch nicht zur Vernetzung beitragen und somit nur in geringem Anteil, beispielsweise unter 10 %, unter 2 % oder unter 0,5 % der reaktiven Gruppen (wie OH, $NH_2$ oder dergleichen) der jeweiligen Komponente(n) beitragen.

Neben den in der vorstehenden Tabelle genannten Mehrkomponenten-Kunstharzsystemen sind auch geeignete Gemische von Komponenten für zwei oder mehr der genannten Mehrkomponenten-Kunstharzsysteme möglich.

Der Anteil der reaktiven Bestandteile am gesamten Mehrkomponentenkunstharzsystem (hier wie an anderen Stellen unter Bezug auf das Gewicht der in ein Substrat eingebrachten Gesamt-Mischung) beträgt beispielsweise 5 bis 95 Gew.-%.

Bei den in der vorstehenden Tabelle genannten Mehrkomponenten-Kunstharzsystemen kann vorgesehen sein, dass mindestens eine der erwähnten Komponenten (z.B. Komponente (c))und/oder mindestens eine weitere Komponente, die jeweils keine Isocyanate beinhalten, Wasser enthalten, eine andere Isocyanate, oder eine Komponente kann Wasser, einer andere Säure (a.B. ein oder mehrere der in der Tabelle genannten Säuren) enthalten, was jeweils die Bildung von Kohlendioxid und somit ein Aufschäumen nach dem.Mischen der Komponenten herbeiführt und so erfindungsgemäß verwendbare Mehrkomponenten-Hart-Schaumstoffsysteme zugänglich macht, die besonders bevorzugt sind. Insbesondere die zu Polyurethanen oder Polyharnstoffen führende Chemie bietet den Vorteil, die verwendeten Kunstharzsysteme auf einfache Weise schäumend einstellen zu können (Reaktion von Isocyanatgruppen mit Wasser in einer anderen als der Isocyanatkomponente), so dass ein guter Verbund mit der Lochwandung gebildet wird bzw. im Fall von Hohlbaustoffen (beispielsweise bei Hohlräumen hinter (z.B. Gipskarton-) Platten oder Kacheln, bei Hohlblocksteinen, bei Hohlräumen hinter Bretterverschalungen oder dergleichen) Formschluß des aus dem Mehrkomponenten-Hartschaumstoffsystem bei der Verwendung gebildeten hinreichend ausgehärteten Hartschaumstoffes ermöglicht wird, was die Fixierung (Befestigung) von Befestigungselementen auch bei Vorliegen von Hohlräumen erlaubt und erleichtert, auch dort, wo ein Fertigdübel keinen ausreichenden Halt finden würde. Daher ist die erfindungsgemäße Verwendung solcher Mehrkomponenten-(Hart-) Schaumstoffsysteme als Mehrkomponenten-Kunstharzsysteme bei Vorliegen solcher Hohlräume besonders bevorzugt. Vorteilhaft wird die Menge der ein Aufschäumen bewirkenden Komponenten und/oder kompressibler Füllstoffe oder -materialien so eingestellt, dass das Volumen des Mehrkomponenten-(Hartschaumstoff-) Systems durch das Aufschäumen und/oder das verdrängbare Volumen der kompressiblen Füllstoffe oder -materialien auf das 1,01- bis 1,4-fache, beispielsweise das 1,05- bis 1,4-fache (des Volumens ohne Aufschäumen) erhöht wird. Vorteilhaft kann das verdrängbare Volumen nur durch Aufschäumen eingestellt sein.

Bei olefinischen Systemen (z.B. (Meth)acrylat- oder Vinylgruppen beinhaltenden Systemen) verwendete Härter z.B. sind im Rahmen der vorliegenden Erfindung beispielsweise solche Verbindungen (= Initiatoren), die in der Lage sind, bei Molekülen mit olefinischen (Doppel-) Bindungen eine Kettenreaktion zur Polymerisation unter Addition von Reaktionsprodukten von Härter und zu polymerisierenden Molekülen an Doppelbindungen weiterer Moleküle zu initiieren; hierzu eignen sich kationische, anonische oder insbesondere radikalbildende Initiatoren (welche bei olefinische Gruppen, wie unsubstituierte oder substituierte Vinylgruppen tragenden Monomeren oder Präpolymeren radikalische Polymerisation bewirken), wie z.B. organische Peroxide, wie Diacylperoxide, z.B. Benzoyl- oder. Bis(4-chlorobenzoyl)peroxid, Ketonperoxide oder Alkylperester, wie tert-Butylperbenzoat, oder ferner Azoinitiatoren, Persulfate oder Perborate, sowie Mischungen davon. Die Initiatoren können in reiner Form oder vorzugsweise phlegmatisiert vorgesehen sein, z.B. mit Gips, Kreide, pyrogener Kieselsäure, Phthalaten, Chlorparaffin oder dergleichen, und gewünschtenfalls versetzt mit einem Füllstoff, insbesondere wie oben genannt, und/oder (insbesondere zur Herstellung einer Paste oder einer Emulsion) einem Lösungsmittel, insbesondere Wasser; wobei insbesondere der Initiator in einer Menge von 1 bis 80, vorzugsweise 20 bis 60 Gew.-% und das Phlegmatisierungsmittel in einer Menge von 1 bis 80, vorzugsweise 30 bis 70 Gew.-%, jeweils bezogen auf die Gesamtmenge an Härterkomponente, beinhaltet sein kann, vorgesehen sein. Bei anderen, beispielsweise in der obigen Tabelle verwendeten reaktiven Systemen können, wie dem Fachmann bekannt ist, bestimmte Komponenten ebenfalls als "Härter" bezeichnet werden.

Besteht ein erfindungsgemäß zu verwendendes Mehrkomponenten-Kunstharzsystem aus zwei Komponenten (z.B. (a) oder (b), wie oben definiert), können diese beispielsweise in einem Verhältnis von (a) : (b) gleich 20 : 1 bis 1 : 20, beispielsweise 10 : 1 bis 1 : 10 Gewichtsanteilen, vorzugsweise von 2 : 1 bis 1 : 2 vorgesehen sein.

Bei drei Komponenten (a), (b) und (c), wie oben definiert, werden diese beispielsweise in einem Verhältnis von (a) : (b) : (c) von (1 bis 20) : (20 bis 1) : (0,01 bis 1) Gewichtsanteilen eingesetzt.

Mehrkomponenten-Kunstharzsysteme können vorzugsweise Mehrkomponenten-Hartschaumstoffsysteme sein. Bei diesen findet beim Mischen ein Aufschäumen statt, was einen besonders guten Kontakt der Mischung mit den Lochwänden und z. B. ein Einbringen nach dem Einbringen Lochwandungen hinterschneidender Teile in Hohlräume ermöglicht und eine besonders gute Eintreibbarkeit und vorhergehende Aufsetzbarkeit (aufgrund der rauen äußeren Oberfläche) von Befestigungselementen ermöglicht.

Besonders bevorzugt sind erfindungsgemäß Zwei-Komponenten-Kunstharzsysteme auf Polyurethanbasis, wobei die Komponenten hierfür vorteilhaft den oben in der Tabelle genannten entsprechen.

"Umfassen" oder "beinhalten" bedeutet, dass neben den jeweils genannten Bestandteilen auch weitere Reaktanden und/oder Zusätze vorhanden sein können, wie vor- und/oder nachstehend genannt. Dies im Unterschied zu "enthalten", welches bedeutet, dass die zugehörigen Bestandteile abschließend aufgeführt wären und daneben keine weiteren Bestandteile mehr vorliegen können.

Die erfindungsgemäß verwendeten Mehrkomponenten-Kunstharzsysteme können vorzugsweise in Form von mehrkomponentigen (insbesondere 2- oder ferner 3-komponentigen) Kits verwendet werden, vorzugsweise als zweikomponentige Kits (wobei die Kits als solche auch ein Beispiel für ein bevorzugtes Mehrkomponenten-Kunstsstoffsystem nach der Erfindung darstellen).

Unter derartigen mehrkomponentigen Kits sind insbesondere solche zu verstehen, die mindestens zwei (räumlich) getrennte Komponenten (a) und (b), wie unten definiert, beinhalten, d.h. solche Verpackungen, welche zwei oder mehr separate, miteinander verbundene und/oder ineinander verschachtelte Behältnisse (Kompartimente) umfassen, deren erste mindestens eine erste reaktive Komponente beinhaltet, z.B. eine Komponente (a), deren zweite mindestens eine weitere Komponente, beispielsweise bei einem Zwei-Komponenten-System eine Komponente (b), beinhaltet, wobei auch noch mindestens eine dritte Komponente (c) in einem weiteren Kompartiment (oder separat) beinhaltet sein kann, und gewünschtenfalls weitere Kompartimente mit weiteren Reaktanden oder Zusätzen vorgesehen sein können. Darunter ist insbesondere eine Ausrüstung zu verstehen, die es ermöglicht, die Komponenten, z.B. bei Zwei- bzw. Dreikomponentenkits (a) und (b) bzw., falls vorhanden, zusätzlich (c), sowie gewünschtenfalls weitere Reaktanden und Zusätze zur Herstellung eines wie vor- und nachstehend beschrieben erhältlichen aushärtenden bzw. schließlich ausgehärteten Mehrkomponenten-Kunstharzsystems am oder nahe dem gewünschten Einsatzort, beispielsweise direkt vor oder in einem Loch so zu vermischen und erforderlichenfalls in einem weiteren Schritt einzubringen, dass dort die Bildung von aus den jeweiligen Komponenten erhältlichen gemischten, aushärtenden und schließlich ausgehärteten Mehrkomponenten-Kunstharzsystemen stattfinden kann bzw. stattfindet. Hierbei kann es sich um getrennte, aber beispielswiese als Set, etwa in einer gemeinsamen Verpackung oder einem gemeinsamen Gebinde, angebotene Behältnisse für die Komponenten, z.B. (a), (b) und ggf. (c), und/oder gegebenenfalls weitere Reaktanden und/oder Zusätze handeln, beispielsweise getrennte Flaschen, Ampullen, Beutel, Tuben oder Kartuschen für die einzusetzenden Komponenten, oder vorzugsweise um Mehrkammersysteme mit mehreren an- und/oder miteinander eine Packungseinheit bildenden Kompartimenten, wie Zwei-, Drei- oder ferner Mehrkammerkartuschen (mit koaxial ineinander oder (z.B. parallel nebeneinander angeordneten) an- und/oder ineinander Behältnissen oder Kompartimenten oder Kammern zur Aufnahme der jeweiligen Komponenten), um Tuben oder Beutel mit entsprechenden Kompartimenten aus Folien oder aus Kunststoff, oder Kombinationen von zwei oder mehr derartigen Behältnissen, in einer weiteren Ausführungsform (insbesondere im Falle von Kartuschen) in Kombination mit Auspressgeräten, wie Ausdrückpistolen, und/oder Statikmischern oder Düsen/Kanülen zum Auspressen und/ oder ferner Behältnissen zum Mischen, wie Schüsseln oder Bechern, handeln. Besonders bevorzugt sind Zwei-Komponenten-Kartuschen- oder Spritzensysteme mit Statikmischer.

Die erfindungsgemäße Verwendung beinhaltet insbesondere auch die sinnfällige Herrichtung von Komponenten und Kits entsprechend einsetzbarer Mehrkomponenten-Kunststoffsysteme, beispielsweise mit (z.B. verbalen und/ oder bildlichen) Anweisungen zu deren entsprechender Verwendung, etwa als Aufkleber, Bedruckungen oder durch andere werbliche Maßnahmen.

Neben den genannten Bestandteilen können die jeweiligen Komponenten und/oder weitere Komponenten auch weitere Zusätze beinhalten, wie Katalysatoren ((beispielsweise in einem Gewichtsanteil von 0,01 bis 20 %, z.B. 0,01 bis 15 % oder in einer möglichen bevorzugten Ausführungsvariante 1,0 bis 10 %, z.B. 1,9 bis 10 %, jeweils bezogen auf die Masse aller Kunstharz-Komponenten), z.B. DABCO (1,4-Diazabicyclo-[2.2.2]octan), Beschleuniger, z.B tertiäre aromatische Amine, und/oder Inhibitoren, Farbstoffe, Pigmente, Wasserfänger, nicht reaktive Verdünner, wie Lösungsmittel, Stabilisatoren, Weichmacher, Thixotropiermittel (besonders bevorzugt, um insbesondere auch bei nicht schäumenden Mehrkomponenten-Kunstharzsystemen ein Ausfließen nach dem Einbringen in ein Loch zu vermindern oder zu verhindern, beispielsweise in einem Gewichtsanteil von 0,5 bis 10 %. in einer möglichen bevorzugten Variante 1,5 bis 10 %, z.B. 2,5 bis 10 %, jeweils bezogen auf die Masse aller Kunstharz-Komponenten, z.B. amorphe Kieselsäure),

Dispergiermittel, Netzmittel, Emulgatoren, Füllstoffe (beispielsweise in einem Gewichtsanteil von 2 bis 50 % bezogen auf die Masse aller Kunstharz-Komponenten), z.B. Sand, Kreide, Zement, Glas, Quarz (z.B. als Quarzmehl oder Quarzsand) Kunststoffe (wie Polypropylen (PP) oder Polyethylen (PE)), Tone, gelöschter Kalk oder dergleichen im wesentlichen nichtreaktives partikuläres Material, Antioxidantien, Fasern, z.B. Cellulosefasern oder Holzfasern, Glasfaser, Kohlefasern oder Kunstfasern, Licht- und/oder UV-Stabilisatoren (beispielsweise in einem Gewichtsanteil von 0,005 bis 5 % bezogen auf die Masse aller Kunstharz-Komponenten), HALS-Stabilisatoren, Haftvermittler, Flammschutzmittel, Schaumstabilisatoren und/oder Reaktivverdünner (beispielswiese in einem Gewichtsanteil von 0,01 bis 40 % bezogen auf die Masse aller Kunstharz-Komponenten), wie niedermolekulare Verbindungen, die über reaktive Vinyl- und/oder Alkoxysilylgruppen verfügen, und/oder vergleichbare Zusätze. Ein oder mehrere derartige Zusätze können vorhanden sein in einer oder mehrerer der Komponenten für die erfindungsgemäß einzusetzenden Mehrkomponenten-Kunstharzsysteme, sowie wie oben näher beschriebene kompressible Füllstoffe und/oder -materialien.

Bezogen auf die Gesamtmasse aller Komponenten nach dem Mischen eines jeweils eingesetzten Mehrkomponenten-Kunstharzsystems während der erfindungsgemäßen Verwendung können solche Zusätze (alle zusammengenommen) in einer Gesamtmenge von insgesamt beispielsweise 0,001 bis 80 Gewichtsprozent vorgesehen sein.

"Gegenstände" oder "Ausführungsformen" der Erfindung sind die Verwendung, das Verfahren und das Mehrkomponentensystem wie vor- und nachstehend definiert.

In einer möglichen Ausführungsform der Gegenstände der Erfindung ist ein Zusatz von Festschmierstoffen, wie z.B. Molybdänsulfid, Polytetrafluorethylen, mikronisierten Wachsen oder Graphit, und/oder der Zusatz von (insbesondere bei Raumtemperatur) flüssigen oder halbflüssigen Schmiermitteln wie z.B. Silikone, z.B. Polydimethylsiloxan, Mineralölen, (halbfesten oder pastösen) Paraffinen oder dergleichen, vorgesehen. Ein derartiger Zusatz, vorzugsweise in einer Gesamtmasse von beispielsweise 0,1 bis 20 Gewichts-Prozent, beispielsweise von 0,1 bis 5 Gewichts-Prozent bezogen auf die Gesamtmasse eines Gemisches der Komponenten eines erfindungsgemäß verwendeten Mehrkomponenten-Kunststoffsystems, ermöglicht eine bevorzugte Ausführungsform der Erfindung, indem die zugesetzten Schmierstoffe eine Verringerung der für das Eintreiben von Befestigungelementen benötigten Kräfte (z.B. Drehmoment bei Schrauben, Schlagkraft oder Druck bei Nägeln etc.) bewirken können. Bevorzugte Drehmomente liegen beispielsweise im Bereich von bis zu höchstens 20 Nm, in möglichen bevorzugten Ausführungsformen 0,3 bis 8, insbesondere 1 bis 6 Nm (bezogen auf eine Schraube und Bedingungen wie unten für die Messung der Auszugskraft beschrieben).

Die Erfindung betrifft daher in einer weiteren besonderen Ausführungsform auch Mehrkomponenten-Kunstharzsysteme und deren Verwendung, insbesondere entsprechende Kits, welche in einer oder mehreren ihrer Komponenten ein oder mehrere derartige Schmierstoffe beinhalten, in einer beispielhaften bevorzugten Ausführungsform in den angegebenen Mengen.

Die Komponenten eines erfindungsgemäß verwendeten Mehrkomponenten-Kunstharzsystems werden kurz bzw. direkt vor dem Ein- oder Aufbringen der Befestigungsmasse gemischt (beispielsweise in geeigneten Gefäßen oder auf geeigneten Flächen) und/ oder erst beim Einbringen in das oder die Löcher, beispielsweise in einer bevorzugten Ausführungsform unter Verwendung von Mehrkammersystemen, wie Kartuschen mit Statikmischern.

"(Mindestens hinreichend) (aus-)gehärtet" (wobei "aushärten", "Aushärten" im Rahmen der vorliegenden Offenbarung überall auch durch den neutraleren Ausdruck "härten" bzw. "Härten" ersetzt werden kann) bedeutet insbesondere, dass das verwendete Mehrkomponenten-Kunstharzsystem wenigstens soweit zur Aushärtung gebracht ist, dass Befestigungselemente darin eingetrieben werden können, insbesondere durch Schrauben, ohne dass sie z.B. unter dem Einfluss der Schwerkraft ihre Lage verändern und ohne dass das verwendete Kunstharzsystem im Moment des Eintreibens noch (insbesondere durch die dabei verwendeten Kräfte, außer höchstens noch im unmittelbaren Bereich des Eintreibens) flüssig-viskos verformbar ist. Vorzugsweise ist, wenn das oder die Befestigungselemente eingebracht werden, die Aushärtung im wesentlichen soweit fortgeschritten, dass insbesondere der entsprechende Mehrkomponenten-Kunstharzkörper auch bei Anwendung von Bewegung (was bei Thixotropie zu einer Verflüssigung führen könnte) nicht mehr fließfähig und im wesentlichen nicht mehr plastisch ist und das Eintreiben des Befestigungselements unter Einscheiden und Spalten der gehärteten Mehrkomponenten-Kunstharzmasse beispielsweise wie beim Eindrehen einer Schraube in Holz (wobei sich die Schraube ein Gegengewinde selbst schneidet) oder beim Einschlagen eines Nagels in Holz erfolgt. Besonders bevorzugt ist, dass der Grad der Härtung bei Belastbarkeit (hier gegeben, wenn die Auszugslast mindestens 20 % der maximalen Auszugslast ist)) so liegt, dass die Auszugskraft spätestens 5 Minuten nach Mischen der Komponenten bei 20 oder mehr Prozent der Auszugskraft bei vollem Durchhärten (maximale Auszugskraft) zu liegen kommt (also spätestens nach 5 Minuten Belastbarkeit gegeben ist). In anderen speziellen Fällen, beilspielsweise, wenn die Zeit bis zum Erstarren noch etwas hinausgezögert werden kann oder soll, um beispielsweise eine Leiter besteigen zu können und/oder ein Erstarren in einer Mischvorrichtung, wie einem Statikmischer, verhindern zu können, kann es auch ausreichen, wenn die Belastbarkeit erst nach 5 oder mehr bis 10 Minuten erreicht wird, was eine andere mögliche bevorzugte Ausführungsform der Erfindungsgegenstände betrifft.

Vorteilhaft wird die Zusammensetzung des erfindungsgemäß zu verwendenden Mehrkomponenten-Kunstharzsystems außerdem so gewählt, dass innerhalb von 60 oder insbesondere weniger als 60 (z.B. 58 oder weniger) Sekunden, oder in einer alternativen Ausführungsform der Erfindung von 180 Sekunden oder weniger, z.B. 60 bis 120 Sekunden,

jeweils nach dem Einbringen (insbesondere nach dem Beginn des Mischens) des erfindungsgemäß zu verwendenden Mehrkomponenten-Kunstharzsystems (bzw. der entsprechenden Mischung) die Gelierung wie oben definiert eintritt (Gelzeit), und auch das Kriterium der Belastbarkeit im Sinne des vorangehenden Absatzes, insbesondere der Angabe von 20 Prozent oder mehr der (maximalen) Auszugskraft bei vollem Aushärtenerfüllt ist.

Dabei bezieht sich die Gelzeit auf die Zeit, nach der ein Verankerungselement befestigt (z.B. eingeschraubt) werden kann, die Zeit bis zur Belastbarkeit auf die Zeit, ab der ein Verankerungselement auch belastet werden kann. Mit anderen Worten: Nach der Gelzeit (wie oben bestimm, Bestimmung im Kunststoffbecher) findet sich ein sprunghafter Anstieg der Viskosität und ein Einbringen eines Befestigungselementes ist möglich, die Belastbarkeit (mindestens 20 % der maximalen Auszugslast) ist aber noch nicht gegeben.

"Im Rahmen [oder "bei"] der Verwendung aushärtend" bedeutet, dass nach dem Mischen der Komponenten eines erfindungsgemäßen Mehrkomponenten-Kunstharzsystems die reaktiven Bestandteile miteinander unter Bildung von Polymeren und unter Vernetzung miteinander reagieren und so zu einem Erstarren des Gemisches führen.

"Flüssig bis pastös" bedeutet, dass das Gemisch der Komponenten (vorzugsweise bereits die Komponenten) des Mehr-komponenten-Kunstharzsystems vor dem Aushärten eine flüssige bis pastöse Konsistenz aufweist, die ein (vorzugsweise leichtes) Einbringen in Löcher in Substraten ermöglicht. Es kann auch (durch geeignete Zusätze wie Thixotropiermittel) thixotrope Eigenschaften haben, d.h. sich bei Bewegung verflüssigen und bei fehlender Bewegung (z.B. nach dem Einbringen) erstarren. Dies ermöglicht vorteilhaft, ein Ausfließen aus einem Loch nach dem Einbringen zu verringern oder zu vermeiden. Die Komponenten und/oder die Gemische davon können als Lösungen und/oder Dispersionen, wie Suspensionen und/oder Emulsionen, vorliegen.

"Ohne zusätzliches Erwärmen" flüssig bedeutet insbesondere, dass die Komponenten eines verwendeten Mehrkomponenten-Kunstharzsystems vor und nach dem Mischen und beim Einbringen in ein Loch nicht durch zusätzliche Maßnahmen (wie Aufheizen, Erhitzen, Bestrahlen oder dergleichen, also aktive Wärmezufuhr durch zusätzliche Hilfsmittel) aufgewärmt werden, was durch die angegebenen Viskositäten gewährleistet ist. Die Temperatur wird so im wesentlichen durch das Mischen und Einbringen über die Temperatur der bei der Verwendung umgebenden Luft und/ oder des Substrates und der einzubringenden flüssigen bis pastösen Mischung des Mehrkomponenten-Kunstharzsystems bestimmt (in letzterer kann durch die ablaufenden chemischen Reaktionen eine gewisse Wärme entstehen, die nicht als aktive Wärmezufuhr zu verstehen ist), also nicht durch aktive Wärmezufuhr. Insbesondere erfolgt keine zusätzliche Erwärmung durch zusätzliche Vorrichtungen, wie Heizpistolen oder dergleichen. Vielmehr liegt die Mischung der Komponenten eines Mehrkomponenten-Kunstharzsystems bei der Verwendung ohne (beispielsweise durch zusätzliche Vorrichtungen bewirkte) zusätzliche Wärmezufuhr und beim -Einbringen in ein Loch bereits im flüssigen bis pastösen Zustand vor, solange sie nicht ausgehärtet und/oder falls sie nicht wegen Thixotropie wegen fehlender Bewegung erstarrt ist. Eine Verflüssigung durch zusätzliches Erwärmen wird demnach nicht vorgenommen, allenfalls Durchmischen oder Bewegung können (insbesondere bei thixotropen Systemen) der für den Verwendungszweck ausreichenden Verflüssigung dienen. Vorzugsweise wird auch keine Erwärmung der Befestigungselemente vor oder bei dem Eintreiben in das (mindestens hinreichend) ausgehärtete Mehrkomponenten-Kunstharzsystem vorgenommen. Dies vereinfacht die Handhabung beträchtlich.

Es werden vernetzende Mehrkomponenten-Kunstharzsysteme verwendet, also solche, die zu Duroplasten reagieren, die nach dem Aushärten nicht mehr durch Erwärmen (z.B. bei starker Sonneneinstrahlung oder dergleichen) schmelzbar sind.

Die Fixierung (insbesondere das Eintreiben) eines Befestigungselements in einem in ein Loch eingebrachtes (mindestens hinreichend) ausgehärtetes Mehrkomponenten-Kunststoffsystem ist zum einen möglich, indem in die ausgehärtete Masse ein oder mehrere zur Aufnahme des oder der Befestigungselemente geeignete Löcher mit Durchmessern gleich oder vorzugsweise kleiner als dem Außendurchmesser der Befestigungselemente ausgebildet werden, z.B. durch Bohren. Vorzugsweise geschieht das Einbringen des oder der Befestigungselemente jedoch durch direktes Eintreiben in die ausgehärtete Masse, vorzugsweise unter Verwendung am Vorderende zugespitzter Befestigungselemente, wie Schrauben, die sich ihr Gewinde im ungebenden Material dann selbst schneiden, oder Nägel, ‚Klammern oder dergleichen, z.B. durch Einschrauben (bevorzugt), z.B. unter Druck, oder ferner Einschlagen oder Einschießen (z.B. mit Tacker-Vorrichtungen).

Das Montageverhalten (exemplarisch belegt als benötigtes Drehmoment beim Eindrehen von Schrauben) und die Ausreißkraft von Befestigungselementen in Prüfkörpern aus ausgehärteten erfindungsgemäß verwendeten Mehrkomponenten-Kunststoffmassen können wie folgt geprüft werden:

Zur Prüfung des Verbundes zwischen Befestigungselement und ausgehärtetem Kunstharzsystem (Ermittlung der Auszugskraft) wird das jeweilige 2- oder Mehr-Komponenten-Kunstharzsystem in einem sehr gut gereinigten Bohrloch der Abmessungen 10 mm (Durchmesser) x 50 mm (Bohrlochtiefe), in Beton eingebohrt ist, mittels einer Zwei- oder Mehrkammerkartusche mit Statikmischer eingebracht. In die ausgehärtete Kunstharzmasse wird eine für das Einschrauben in Holz geeignete, am Vorderende zugespitzte Schneidschraube (5 x 70 mm, SPAX® der Firma Altenloh, Brinck & Co - Gruppe, Ennepetal, Deutschland) (gewünschtenfalls unter Messung des dazu erforderlichen Drehmomentes) 45 mm tief eingeschraubt. Anschließend wird durch einen Auszugversuch mit enger Abstützung die Versagenslast ermittelt.

Die Prüfung erfolgt mittels eines Dreibeinstativs mit Hydraulikzylinder und Kraftmessdose mit einer derart eingestellten Geschwindigkeit, dass der Bruch nach ca. 5 bis.30 sec. erfolgt. Die so ermittelte Auszugskraft wird in kN angegeben.

Die erzielten Auszugskräfte liegen im vollständig ausgehärteten Zustand beispielsweise im Bereich derjenigen von Kunststoffdübeln in Beton.

Durch Zusatz von Schmierstoffen kann das zum Eindrehen der Schraube erforderliche Drehmoment verringert werden, beispielsweise um 20 bis 80 % (insbesondere bei wenig kompressiblen Anteil beinhaltenden Mehrkomponentenharzen, beispielsweise mit nur 0,1 bis 1 % verdrängbarem Anteil), was eine mögliche bevorzugte Ausführungsform der Erfindung darstellen kann.

Weitere bevorzugte Ausführungsformen der Erfindung finden sich in den Ansprüchen, vorzugsweise in den Unteransprüchen. Die . Ansprüche werden daher hier durch. Bezugnahme als Bestandteil der Beschreibung aufgenommen.

Stärker bevorzugte Ausführungsformen der Erfindung ergeben sich auch, wenn einer, mehrere oder alle allgemeineren in den Ansprüchen verwendeten Ausdrücke durch vor- oder nachstehend definierte spezifischere Definitionen ersetzt werden.

Besonders bevorzugte Ausführungsformen der Erfindung finden sich auch in den Beispielen, insbesondere in Beispiel 1, wobei dort die angegebenen Bereiche für Parameter um plus oder minus 10 Prozent variiert werden können, um eine ebenfalls noch sehr bevorzugte Ausführungsform zu definieren.

Die nachfolgenden Beispiele dienen der Illustration der Erfindung, ohne ihren Umfang einzuschränken.

Soweit nichts anderes angegeben ist, beispielsweise auch in den oben beschriebenen Methoden zur Bestimmung von Parametern, erfolgen alle Versuche bei 23 °C.

Die Bestimmung von Parametern (wie Vernetzungsdichte, Sagging usw.) erfolgt nach den oben beschriebenen Methoden.

Referenzbeispiel: Nicht ausreichendes Mehrkomponenten-Kunstharzsystem

Die beiden Komponenten eines Zwei-Komponenten-Kunstharzsystem werden getrennt in die beiden Kammern einer Zweikammerspritze gefüllt (Volumenverhältnis 1:1):

A-Komponente:

| Bestandteil | Gewichtsanteil (%) | Hydroxylzahl (mg KOH/g) | mittlere Funktionalität |
|---|---|---|---|
| 1,4-Butandiol | 25,00 | 1246 | 2 |
| Dibutylzinndilaurat (DBTL) | 0,20 | 0 | 0 |
| DABCO 33 LV[1] | 1,50 | 560 | 2 |
| Scotchlite Glass Bubbles K1[2] | 5,50 | 0 | 0 |
| Voranol P 400[3] | 64,25 | 260 | 2 |
| Wacker HDK H 18[4] | 2,75 | 0 | n.a. |
| Vestamin IPD[5] | 0,50 | 659 | 2 |

(fortgesetzt)

| Bestandteil | Gewichtsanteil (%) | Hydroxylzahl (mg KOH/g) | mittlere Funktionalität |
|---|---|---|---|
| Wasser | 0,30 | 6234 | 2 |

1) 1,4-Diazabicyclo[2.2.2]oktan, Warenzeichen der Air Products & Chemicals, Inc., Allentown, USA
2)Hohlglaskugeln mit einer Schüttdichte von 0,05-0,1 g/$cm^3$, Teilchengröße im wesentlichen gleich oder weniger als 120 μm, Warenzeichen der Firma 3M, St. Paul, MN, USA
3) Polypropylenglykol, durchschnittliches Molekulargewicht 400, Warenzeichen der Firma Dow Chemical Co., Midland, Michigan, USA
4) synthetisches, hydrophobe, amorphe, flammenhydrolytisch hergestellte Kieselsäure, Dichte ca. 2200 g/ 1, < 0.5 Silanol gebunden, Warenzeichen der Wacker Chemie AG, München, Deutschland.
5) Härter auf Basis Isophorondiamin und cycloaliphatischer Amine, Warenzeichen von Evonik Industries AG, Essen, Deutschland
6) Mischung von Diphenylmethan-4,4'-diisocyanat (MDI) mit isomeren und homologen Formen höherer Funktionalität, Warenzeichen der Firma Bayer Material Science AG, Leverkusen, Deutschland
7) aromatisches Polyisocyanat-Präpolymer auf Basis MDI, , Warenzeichen der Firma Bayer Material Science AG, Leverkusen, Deutschland

B-Komponente:

| Bestandteil | Gewichtsanteil (%) | NCO-Gehalt [%] | mittlere Funktionalität |
|---|---|---|---|
| Desmodur 44 V 10 L[6] | 49,0 | 31,0 | 2,7 |
| Desmodur E 23[7] | 47,5 | 15,4 | 2,1 |
| Wacker HDK H 18[4] | 3, 5 | 0,0 | n.a. |

Unter Verwendung der in der allgemeinen Beschreibung genannten Messmethoden finden sich folgende Parameter für diese Zusammensetzung:

| | |
|---|---|
| Thixotropieindex: | 4,7 |
| viskosität Komponente A: | 37,2 Pa.s |
| Viskosität Komponente B: | 30,4 Pa.s |
| mittlere Viskosität gesamt: | 33,8 Pa.s |
| Vernetzungsindex: | 2,25 |
| Sagging: | 2 mm |
| Siebhülsentest: | tropft geringfügig ab |
| Gelzeit | 34 s |
| Eindrehmoment | 2,1 Nm |
| Auszugskraft: | 5,4 kN |
| Nach 5 min 20 % der maximalen Auszugskraft erreicht? | nein |
| Dauerstandversuch bestanden | nein |

Fazit: Diese Mischung ergibt zu geringe Kriechresistenz, zeigt leichtes Sagging und zeigt eine zu lange Aushärtungszeit für praktische Anwendungen (nach 5 bzw. 10 min wird noch keine ausreichende Belastbarkeit erreicht).

<u>Beispiel 1: Erfindungsgemäßes Zwei-Komponenten-Hartschaumstoffsystem und erfindungsgemäße Verwendung:</u>

Die beiden Komponenten eines Zwei-Komponenten-Kunstharzsystem werden getrennt in die beiden Kammern einer Zweikammerspritze gefüllt (Volumenverhältnis 1:1) (Angaben zu den Warenzeichen finden sich im Referenzbeispiel, soweit nicht gesondert angegeben):

A-Komponente:

| Bestandteil | Gewichtsanteil (%) | Hydroxylzahl (mg KOH/g) | mittlere Funktionalität |
|---|---|---|---|
| 1,4-Butandiol | 9,75 | 1246 | 2 |
| Voranol RN 490[8] | 38,99 | 490 | 9, 6 |
| DABCO 33 LV | 3, 90 | 560 | 2 |
| Scotchlite Glass Bubbles K1 | 5,36 | 0 | 0 |
| Voranol P 400 | 38,06 | 260 | 2 |
| Wacker HDK H 18[4] | 3,65 | 0 | n.a. |
| Wasser | 0,29 | 6234 | 2 |
| [6]) Polyetherpolyol, Durchschnitts-Molekulargewicht 490, Warenzeichen der Firma Dow Chemical Co., Midland, Michigan, USA | | | |

B-Komponente:

| Bestandteil | Gewichtsanteil (%) | NCO-Gehalt [%] | Funktionalität |
|---|---|---|---|
| Desmodur 44 V 10 L[6] | 49,0 | 31,0 | 2,7 |
| Desmodur E 23[7] | 47,5 | 15,4 | 2,1 |
| Wacker HDK H 18[4] | 3,5 | 0,0 | n.a. |

Unter Verwendung der in der allgemeinen Beschreibung genannten Messmethoden finden sich folgende Parameter für diese Zusammensetzung:

| | |
|---|---|
| Thixotropieindex: | 6,1 |
| Viskosität Komponente A: | 85,2 (Pa·s |
| Viskosität Komponente B: | 30,4 Pa·s |
| mittlere Viskosität gesamt: | 57,8 Pa·s |
| Vernetzungsindex: | 2,79 |
| Sagging: | 1 mm |
| Siebhülsentest: | tropft nicht ab |
| Gelzeit | 30 s |
| Eindrehmoment: | 1,3 Nm |
| Auszugskraft: | 8,3 kN |
| Nach 5 min 20 % der maximalen Auszugskraft erreicht? | ja |
| Dauerstandversuch bestanden | ja |

Fazit: Mit den gefundenen Werten lassen sich sehr gute Zugkräfte und die Erfüllung aller anderen Bedingungen für eine nützliche erfindungsgemäße Mischung und deren Verwendung aufzeigen.

<u>Beispiel 2:</u> Variation des Thixotropieindex und der Viskosität (mPa·s):

Analog Beispiel 1 werden Zwei-Komponentensysteme hergestellt, wobei die Menge des Wacker HDK H 18 wie in der nachfolgenden Tabelle variiert wird, dagegen die übrigen Bestandteile in den für Beispiel 1 genannten Mengen zugesetzt werden:

| Anteil HDK H18 (Gew. %) | Viskosität A (mPas) | Viskosität B (mPas) | Viskosität Mittel (Pas) | Thixotropieindex (Mittel) | Sagging (mm) | Ausdrück kraft (N)[1] | Ausdrück kraft (N)[2] | Siebhülse (Abtropfen) |
|---|---|---|---|---|---|---|---|---|
| 1,50 | 29 200 | 2 800 | 16,0 | 2, 5 | 6,2 | 59,57 | 28,18 | ja |
| 2,50 | 61 000 | 8 400 | 34,7 | 4, 6 | 2 | 91,11 | 30,3 | ja |
| 3,25 | 85 000 | 35 000 | 60,0 | 5,4 | 1 | 100,2 | | - |
| A 3,75+ B 3,5 | 114000 | 50 000 | 82,0 | 6,1 | 0,8 | 118 | | nein |
| 4,25 | 179000 | 60 200 | 100,1 | 6, 5 | 0,2 | 136,4 | | nein |
| 5,00 | 237000 | 104000 | 141,5 | 6,0 | 0,2 | 168,5 | 36,4 | nein |
| 6,00 | 114000 | 172000 | 204,5 | 7,1 | 0 | 214,9 | 39,19 | nein |
| A 3,75+ B 2, 5 | | 8 400 | 61,2 | 4,7 | 2 | | | nein |
| "Mittel" bedeutet Mittelwert.<br>[1]) mit Statikmischer<br>[2]) ohne Statikmischer<br>[3]) nein bedeutet kein Abtropfen, ja bedeutet Abtropfen | | | | | | | | |

Dies zeigt vorteilhafte Bedingungen für die Thixotropie und den Thixotropieindex, bei denen kein nenneswertes Sagging und kein Abtropfen gefunden werden bei gleichzeitig günstigen Verhältnissen für die Auspresskraft.

Beispiel 3: Variation der Gelzeit durch Variation der Katalysatormenge

Nachfolgend werden die Ergebnisse einer Reihe von Versuche gekennzeichnet, bei denen die Menge an Katalysator (DABCO 33 LV) bei einer ansonsten Beispiel 1 entsprechenden Zusammensetzung variiert werden. Es werden die Gelzeiten ($t_{gel}$) und die Auszugskräfte ermittelt, wie im allgemeinen Teil der Beschreibung erwähnt.

| Aushärtezeit (min) | 5 | 10 | 15 | 20 | 30 | 960 | Gew.-Anteil DABCO 33 LV (%) |
|---|---|---|---|---|---|---|---|
| $t_{gel}$ (s) | Auszugskraft (kN) ((% des Maximalwertes)) | | | | | | |
| 18 | 3,67 ((59)) | 6,21 | 6,13 | 5,86 | 5,95 | 6,27 | 8,0 |
| 31 | 4,54 ((45)) | 6,25 | 8,74 | 9,30 | 10,26 | 10,01 | 4,2 |
| 50 | 2,72 ((29)) | 6,40 | 7,31 | 8,44 | 9,11 | 9,53 | 2,8 |
| 75 | 1,23 ((12)) | 3,81 | 6,38 | 6,91 | 8,96 | 10,15 | (1,7) |

Nur bei den fett markierten Zusammensetzungen wird die aus praktischen Gründen gewählte Bedingung, dass nach 5 Minuten die Auszugskraft 20 % der maximalen Auszugskraft betragen soll, erfüllt. Bei Gelzeiten oberhalb von 60 Sekunden, z.B. ca. 65 Sekunden, dagegen ist nach 5 Minuten die Auszugskraft noch zu klein für eine sofortige Belastung (hier definiert als Belastung nach 5 min), kann aber nach mehr als 5 bis 10 Minuten durchaus ausreichen, so dass für langsamere Handhabungen auch bei solchen Ausführungsformen eine Möglichkeit eröffnet wird, falls dies gewünscht wird (beispielsweise, um ein zu rasches Aushärten in Mischvorrichtungen, wie einem Statikmischer, zu verhindern).

Dieses Beispiel zeigt, dass es leicht möglich ist, beispielsweise durch Variation der Katalysatorkonzentration eine ausreichend kurze Gelzeit einzustellen. Sofortige Belastung ist nach Definition erreichbar, wenn die Auszugskraft 20 % des Maximalwertes (Wert nach vollständiger Aushärtung) nach 5 min erreicht hat.

Beispiel 4: Abhängigkeit der Eindrehmomente und anderer Paramater von der Kompressibilität (hier als Volumenzunahme):

Es werden verschiedene Versuche mit bekannten und mit erfindungsgemäßen (durch * gekennzeichnet) Kunstharzsystemen durchgeführt.

| Material | Volumenänderung AV (Änderung gegenüber voll komprimiertem Volumen = 1) | Auszugskraft aus Vollbaustoff (kN) | Auszugskraft Mauerwerk mit Siebhülse (kN) | Eindrehmoment (Nm) |
|---|---|---|---|---|
| FIS V | 0 | Schraubenversagen | Schraubenversagen | Eindrehen unmöglich |
| FIS EM | 0 | Schraubenversagen | - | Eindrehen unmöglich |
| Heißkleber | 0 | 1, 3 | - | 0,8 |
| Beispiel [1] | 0,028 (< 0,05) | 3 | - | 8 |
| Beispiel 1 | 0,14 (0,05 - 0,40) | 3,5 | - | 5 |
| Referenz 3[2] | 0,5 (> 0,4) | 2 | - | 3,5 |
| PU 2/402 | 30 | Auszug von Hand möglich | Auszug von Hand möglich | nicht messbar |
| PU 1/750 | 40 | Auszug von Hand möglich | Auszug von Hand möglich | nicht messbar |

FIS V = FIS V 360 S (Hybrid-Vinylester-2-Komponenteninjektionsmörtel,
FIS EM = FIS EM 390 S (Epoxidharz-3-Komponenteninjektionsmörtel),
PU 2/402 = 2-Komponenten-Polyurethanschaum (Montageschaum), PU 1/750 = 1-Komponenten-Polyurethanschaum (Montageschaum), alle von fischerwerke GmbH & Co. KG, Waldachtal, Deutschland.
[1]), [2]) Zusammensetzungen analog Beispiel 1 mit dem angegebenen Aufschäumvolumen entsprechenden Schaumbildnern (Wasser/OCN-Basis)

Dieses Beispiel zeigt, dass geeignete Auszugskräfte gemeinsam mit geeigneten Eindrehmomenten lediglich bei einer Volumenzunahme (allgemeiner Komprimierbarkeit des Endproduktes) von ungefähr 1, vorzugsweise 5, bis 40 % zu finden sind.

Bei geringeren Volumenänderungen ist ein Eindrehen praktisch nicht mehr möglich, bei höheren Volumenänderungen ist die ausgehärtete Masse aufgrund des hohen Hohlraumanteils zu weich und zwar ein leichtes Eindrehen möglich, aber die Schraube von Hand herausziehbar (zu geringe Auszugskraft, also zu geringe Belastbarkeit).

## Patentansprüche

**1.** Bei Umgebungstemperatur ohne aktives Erwärmen über die Umgebungstemperatur flüssiges bis pastöses, im Rahmen der Verwendung aushärtendes Mehrkomponenten-Kunstharzsystem zur Fixierung von ein oder mehreren Befestigungselementen in einem Substrat, wobei das besagte Mehrkomponenten-Kunstharzsystem ohne zusätzliches Erwärmen des Mehrkomponenten-Kunstharzsystem nach oder während des Mischens seiner Komponenten in mindestens ein Loch eingebracht werden kann, **dadurch gekennzeichnet, dass** die nach dem Mischen resultierende Masse

- ein verdrängbares Volumen von 0,1 bis 40 Vol.-%, durch komprimierbare Zusätze, bei denen das verdrängbare Volumen dem der umschlossenen Hohlräume entspricht und/oder im Falle einer Schaumstruktur bestimmt, indem ein definiertes Volumen aus einer Mehrkammerkartusche bei einer konstanten Kolbenvorschubgeschwindigkeit von 150 mm/min bei 23 °C und 50 % relativer Luftfeuchte über einen statischen Mischer in einen Kunststoffbecher gepresst wird und nach der Aushärtung das Volumen des Prüfkörpers mittels einer Tauchwägung ermittelt und die Volumenzunahme relativ zum Aungangsvolumen berechnet und so bestimmt wird;
- eine Gelzeit von 5 bis 65 Sekunden, bestimmt mittels 5-g-Ansätzen durch Bereitstellen aller Komponenten im entsprechenden Volumenverhältnis in einem Einmalkunststoffbecher und bei manuellem Durchmischen mit einem Holzspatel, wobei die Gelzeit hier als die zeit vom Beginn des Durchmischens bis zum sprunghaften

Anstieg der Viskosität, bei welcher der Spatel nicht mehr von Hand in der Masse bewegt werden kann, definiert ist; - und vor dem Aushärten eine mittlere Viskosität bei 23 °C von 1000 Pa·s oder niedriger - wobei eine der Komponenten des Mehrkomponenten-Kunstharzsystems eine Viskosität von mindestens 30 Pa·s aufweist -, wobei die mittlere Viskosität jeweils nach DIN EN ISO 2555 mit einem Brookfield DV-III+-Viskosimeter mit Spindel 7 bei 10 Umdrehungen/Minute (U/min) bei 23 ° C gemessen und in Pa·s angegeben wird;
- einen Thixotropieindex im Bereich von 4 bis 10, welcher durch Bestimmung der Viskositäten der Komponenten wie im vorstehenden Absatz bei 1 und 10 U/min des Viskosimeters und Bildung des Koeffizienten aus den so erhaltenen Viskositäten bei 1 und 10 U/min, gefolgt von der Bildung des Mittelwertes für alle Komponenten, gewichtet nach deren relativem Volumenanteil an der resultierenden Mischung vor einem eventuellen Aufschäumen nach dem Vermischen der Komponenten bestimmt wird;
aufweist und einen Vernetzungsindex von 2,3 bis 10, bestimmt nach folgender Gleichung:

$$I_V = \frac{\Sigma(n_i(A_i) \cdot f_i)}{\Sigma(n_i(A_i))} \qquad \text{(Gleichung A)}$$

worin
- $A_i$ die Art der jeweiligen an einer Polymerisation teilnehmenden Gruppe einer Komponente,
- $n_i$ die Stoffmenge (Anzahl) der entsprechenden Gruppen des Moleküls i des Gesamtsystems und
- $f_i$ die jeweilige, bei Gemischen gegebenenfalls mittlere, Funktionalität der reaktiven Moleküle unter Berücksichtigung der Anzahl der Reaktionsmöglichkeiten mit einem potentiellen Reaktionspartner,

bedeuten, wobei jeweils vorausgesetzt ist, dass bei 2-oder Mehrkomponentensystemen stöchiometrische Verhältnisse der Komponenten vorliegen, so dass die Menge überschüssiger reaktiver Gruppen einer Komponente nicht um mehr als 10 % von der stöchiometrisch richtigen Menge abweichen sollte und wobei vollständige Umsetzung angenommen wird;
aufweist.

2. Mehrkomponenten-Kunstharzsystem nach Anspruch 1, **dadurch gekennzeichnet, dass** es einen Vernetzungsindex von 2,4 bis 5 aufweist.

3. Mehrkomponenten-Kunstharzsystem nach Anspruch 1 oder Anspruch 2, **dadurch gekennzeichnet, dass** es eine Gelzeit von 5 bis 60 Sekunden aufweist und die mittlere Viskosität bei 30 bis 1000 Pa·s liegt.

4. Mehrkomponenten-Kunstharzsystem nach einem der Ansprüche 1 bis 3, **dadurch gekennzeichnet, dass** es 5 Minuten nach dem Mischen für das Eindrehen einer Schneidschraube 5 x 70 mm bei Eindrehtiefen von 40 mm bis 45 mm ein Eindrehmoment von 9 Nm oder weniger aufweist.

5. Mehrkomponenten-Kunstharzsystem nach einem der Ansprüche 1 bis 4 in Form eines Zweikomponentensystems, **dadurch gekennzeichnet, dass** es sich um ein Polyurethan-, ein Polyharnstoff- oder ein Polyharnstoff/ Polyurethanbasiertes System handelt, mit

(i) ein oder mehreren Di- und/oder Polyisocyanaten als Komponente a) und für die Herstellung von Polyurethanen ein oder mehreren Di- und/oder Polyolen als Komponente b);
(ii) ein oder mehreren Di- und/oder Polyisocyanaten als Komponente a) und für die Herstellung von Polyharnstoffen ein oder mehreren Di- und/oder Polyaminen als Komponente b); oder
(iii) ein oder mehreren Di- und/oder Polyisocyanaten als Komponente a) und für die Herstellung von Polyurethan/ Polyharnstoff-Mischpolymeren ein oder mehreren di- und/oder polyfunktionellen Amino-, Hydroxy- und/oder Amino- und Hydroxyverbindungen als Komponente b).

6. Mehrkomponenten-Kunstharzsystem nach einem der Ansprüche 1 bis 5, **dadurch gekennzeichnet, dass** das verdrängbare Volumen durch Aufschäumen auf der Basis der Reaktion von Wasser mit Isocyanatgruppen unter Bildung von Kohlendioxid und/oder komprimierbare oder durch Zerstörung von Hohlkörpern volumenfreisetzende Zusätze erzielt wird und das resultierende verdrängbare Volumen bei 0,5 bis 40 % liegt.

7. Mehrkomponenten-Kunatharzsystem nach einem der Ansprüche 1 bis 6, **dadurch gekennzeichnet, dass** der Thixotropieindcx im Bereich von 4,5 bis 8 liegt, und/oder dass die Viskosität durch unbehandelte oder oberflächenbehandelte pyrogene Kieselsäure in einer Konzentration im Bereich von 0,5 bis 10% in einer, mehreren oder allen der Komponente des Mehrkomponenten-Kunstharzsystems eingestellt wird.

8. Mehrkomponenten-Kunstharzsystem nach einem der Ansprüche 1 bis 7, **dadurch gekennzeichnet, dass** die Zahl der reaktionsfähigen Gruppen einer Zahl von mehr als 2 mval/g entspricht.

9. Mehrkomponenten-Kunstharzsystem nach einem der Ansprüche 1 bis 8, **dadurch gekennzeichnet, dass** es sich um ein Polyurethansystem handelt, bei dem das molare Verhältnis von Isocyanatgruppen zu OH-Gruppen bei 1,1 oder darunter liegt.

10. Mehrkomponenten-Kunstharzsystem nach einem der Ansprüche 1 bis 9, ausgeführt als Zweikomponentenssystem in Form einer Zweikammer-Kartusche oder einer Zweikammerspritze mit Statikmischer.

11. Mehrkomponenten-Kunstharzsystem nach einem der Ansprüche 1 bis 10, **dadurch gekennzeichnet, dass** nach dem vollständigen Aushärten die Auszugkraft bei 6 bis 20 kN liegt, wobei die Auszugkraft mit einer am Vorderende zugespitzten Schneidschraube 5 x 70 mm, die eingeschraubt wird, und anschließend durch einen Auszugversuch mit enger Abstützung die Versagenslast ermittelt wird, wobei die Prüfung mittels eines Dreibeinstativs mit Hydraulikzylinder und Kraftmessdose mit einer derart eingestellten Geschwindigkeit erfolgt, dass der Bruch nach ca. 5 bis 30 sec. erfolgt.

12. Mehrkomponentensystem nach einem der Ansprüche 1 bis 11, **dadurch gekennzeichnet, dass** die ausgehärtete Masse Dauerstandfestigkeit aufweist, wobei die Dauerstandfestigkeit durch Dauerstandsversuche ermittelt wird, indem die Komponenten des Mehr-Komponenten-Kunstharzsystems in ein sehr gut gereinigtes Bohrloch der Abmessungen 10 mm Durchmesser x 50 mm Bohrlochtiefe, welches in Beton eingebracht ist, mittels einer entsprechenden Mehrkammerkartusche mit Statikmischer eingebracht werden, nach einer Aushärtezeit von 5 min in die Kunstharzmasse eine Schneidschraube 5 x 70 mm 45 mm tief eingeschraubt wird, und anschließend über ein Hebelsystem eine Dauerlast von 20 % der Maximallast aufgebracht und die Verschiebung am Schraubenkopf als Funktion der Zeit gemessen wird, wobei ein System als dauerstandfest gilt, wenn die Verschiebung nach einer tolerierbar niedrigen Anfangsverschiebung asymptotisch gegen einen tolerierbaren Grenzwert läuft, also bezogen auf die Zeit keine unbegrenzte Verschiebbarkeit gegeben ist.

13. Mehrkomponentensystem ansonsten nach einem der Ansprüche 1 bis 12, **dadurch gekennzeichnet, dass** die Gelzeit 180 Sekunden oder weniger beträgt.

14. Mehrkomponentensystem nach einem der Ansprüche 1 bis 13,
**dadurch gekennzeichnet, dass** ein "Sagging" von unter 2 mm der entsprechenden Mischung gefunden wird, wenn 1 g
der Masse aus einer Mehr-Kammerkartusche über einen Statikmischer auf eine kreisrunde Markierung mit einem Durchmesser von 0,85 mm auf einem Papier aufgebracht und senkrecht gestellt wird und zur Beurteilung des Sagging bei Raumtemperatur die Distanz zwischen dem unteren Rand der Markierung und dem unteren Ende des Tropfens in Millimetern gemessen wird.

15. Verwendung eines flüssigen bis pastösen, im Rahmen der Verwendung aushärtenden Mehrkomponenten-Kunstharzsystems zur Fixierung von Befestigungselementen in einem Substrat, wobei ein ohne zusätzliches Erwärmen bei Umgebungstemperatur ohne aktives Erwärmen über die Umgebungstemperatur flüssiges bis pastöses Mehrkomponenten-Kunstharzsystem nach oder während des Mischens seiner Komponenten in mindestens ein Loch eingebracht wird, gewartet wird, bis es dort gehärtet ist und dann mindestens ein Befestigungselement in die gehärtete resultierende Kunstharzmasse eingetrieben wird, wobei die nach dem Mischen resultierende Masse ein verdrängbares Volumen von 0,1 bis 40 Vol.-%, eine
Gelzeit von 5 bis 65 Sekunden und vor dem Aushärten eine aus den Viskositäten der gewichteten Komponenten durch Mitteln errechnete mittlere viskosität von 1000 Pa·s oder niedriger bei 23 °C aufweist - wobei eine der Komponenten des Mehrkomponenten-Kunstharzsystems eine Viskosität von mindestens 30 Pa·s aufweist -, eine Thixotropie mit einem Thixotropieindex im Bereich von 4 bis 10, , sowie einen Vernetzungsindex von 2,3 bis 10 aufweist, wobei die vorgenannten Parameter wie in Anspruch 1 beschrieben bestimmt werden.

16. Verwendung nach Anspruch 15, wobei das Mehrkomponenten-Kunstharzsystem im ausgehärteten Endzustand eine Vernetzungsdichte basierend auf einem Vernetzungsindex von 2,4 bis 5 aufweist.

**17.** Verwendung nach einem der Ansprüche 15 oder 16, **dadurch gekennzeichnet, dass** dabei als Mehrkomponenten-Kunstharzsystem eines nach einem der Ansprüche 2 bis 14 verwendet wird.

**18.** Verfahren zur Fixierung von Befestigungselementen, beinhaltend eine Verwendung nach einem der Ansprüche 15 bis 17.

## Claims

**1.** Multi-component synthetic resin system that at ambient temperature without active heating above ambient temperature is liquid to paste-like and becomes hardened in the course of use, for fixing one or more fastening elements in a substrate, it being possible for said multi-component synthetic resin system to be introduced into at least one hole without additional heating of the multi-component synthetic resin system after or during mixing of its components, **characterised in that** the mass resulting after mixing has

- a displaceable volume of from 0.1 to 40 % by volume, as a result of compressible additives wherein the displaceable volume corresponds to, and/or in the case of a foam structure defines, that of the surrounded voids, wherein a defined volume is expelled from a multi-chamber cartridge at a constant plunger-advancing speed of 150 mm/min at 23°C and 50 % relative humidity via a static mixer into a plastics beaker and, after becoming hardened, the volume of the test specimen is ascertained by means of immersion weighing and calculating and thereby determining the increase in volume relative to the starting volume;
- a gel time of from 5 to 65 seconds, determined by means of 5-g batches, by placing all components in the appropriate volumetric ratio in a disposable plastics beaker and thoroughly mixing manually with a wooden spatula, the gel time here being defined as the time from the start of thorough mixing until the sudden increase to the viscosity where the spatula can no longer be moved by hand in the mass;
- and, before becoming hardened, an average viscosity at 23°C of 1000 Pa·s or less - one of the components of the multi-component synthetic resin system having a viscosity of at least 30 Pa·s -, the average viscosity in each case being measured in accordance with DIN EN ISO 2555 using a Brookfield DV-III+ viscometer with spindle 7 at 10 revolutions/minute (rpm) at 23°C and being given in Pa·s;
- a thixotropic index in the range from 4 to 10, which is determined by determination of the viscosities of the components as in the preceding paragraph at 1 and 10 rpm of the viscometer and formation of the coefficient from the viscosities thereby obtained at 1 and 10 rpm, followed by formation of the average for all components, weighted according to their relative volumetric proportion in the resulting mixture before any possible foaming after mixing of the components;

and has a cross-linking index from 2.3 to 10, determined according to the following equation:

$$I_V = \frac{\Sigma(n_i(A_i) \cdot f_i)}{\Sigma(n_i(A_i))} \qquad \text{(equation A)}$$

wherein
- $A_i$ denotes the nature of the particular group, of a component, that participates in polymerisation,
- $n_i$ denotes the amount in terms of substance (number) of the corresponding groups of the molecule i of the complete system, and
- $f_i$ denotes the particular - optionally average, in the case of mixtures - functionality of the reactive molecules taking into account the number of reaction possibilities with a potential reaction partner,

it being presupposed in each case that in the case of systems of 2 or more components stoichiometric ratios of the components are present so that the amount of excess reactive groups of a component should not differ by more than 10 % from the stoichiometrically correct amount and wherein complete reaction is assumed.

**2.** Multi-component synthetic resin system according to claim 1, **characterised in that** it has a cross-linking index from 2.4 to 5.

**3.** Multi-component synthetic resin system according to claim 1 or claim 2, **characterised in that** it has a gel time from 5 to 60 seconds and the average viscosity is 30 to 1000 Pa·s.

**4.** Multi-component synthetic resin system according to one of claims 1 to 3, **characterised in that**, 5 minutes after

mixing, it has a driving-in torque of 9 Nm or less for driving in a 5 x 70 mm self-tapping screw at drive-in depths from 40 mm to 45 mm.

5. Multi-component synthetic resin system according to one of claims 1 to 4 in the form of a two-component system, **characterised in that** it is a polyurethane-, polyurea- or polyurea/polyurethane-based system, having

   (i) one or more di- and/or poly-isocyanates as component a) and, for the preparation of polyurethanes, one or more di- and/or poly-ols as component b);
   (ii) one or more di- and/or poly-isocyanates as component a) and, for the preparation of polyureas, one or more di- and/or poly-amines as component b); or
   (iii) one or more di- and/or poly-isocyanates as component a) and, for the preparation of polyurethane/polyurea mixed polymers, one or more di- and/or poly-functional amino, hydroxy and/or amino and hydroxy compounds as component b).

6. Multi-component synthetic resin system according to one of claims 1 to 5, **characterised in that** the displaceable volume is achieved by foaming on the basis of the reaction of water with isocyanate groups with formation of carbon dioxide and/or by additives that are compressible or that free up volume as a result of elimination of voids and the resulting displaceable volume is 0.5 to 40 %.

7. Multi-component synthetic resin system according to one of claims 1 to 6, **characterised in that** the thixotropic index is in the range from 4.5 to 8, and/or **in that** the viscosity is set by means of untreated or surface-treated pyrogenic silicic acid in a concentration in the range from 0.5 to 10 % in one, more than one or all of the components of the multi-component synthetic resin system.

8. Multi-component synthetic resin system according to one of claims 1 to 7, **characterised in that** the number of reactive groups corresponds to a number of more than 2 mval/g.

9. Multi-component synthetic resin system according to one of claims 1 to 8, **characterised in that** it is a polyurethane system in which the molar ratio of isocyanate groups to OH groups is 1.1 or less.

10. Multi-component synthetic resin system according to one of claims 1 to 9, provided as a two-component system in the form of a two-chamber cartridge or a two-chamber syringe with static mixer.

11. Multi-component synthetic resin system according to one of claims 1 to 10, **characterised in that**, after becoming completely hardened, the pull-out force is from 6 to 20 kN, the pull-out force being ascertained using a 5 x 70 mm self-tapping screw pointed at the front end, which is screwed in and then the failure load being ascertained by means of a pull-out test with close support, the test being carried out using a tripod support with hydraulic cylinder and load measuring cell at a speed set so that the break occurs after about 5 to 30 seconds.

12. Multi-component system according to one of claims 1 to 11, **characterised in that** the hardened mass has fatigue limit strength, the fatigue limit strength being ascertained by fatigue limit tests, wherein the components of the multi-component synthetic resin system are introduced, by means of an appropriate multi-chamber cartridge having a static mixer, into a very well-cleaned drilled hole introduced into concrete, having the dimensions of 10 mm diameter x 50 mm drilled hole depth, after a hardening time of 5 mins. a 5 x 70 mm self-tapping screw is screwed 45 mm deep into the synthetic resin mass, and then, by means of a lever system, a continuous load of 20 % of the maximum load is applied and the displacement at the screw head is measured as a function of time, a system being considered to have fatigue limit strength if the displacement following a tolerably low initial displacement asymptotically approaches a tolerable limit value, that is to say there is no unlimited displaceability relative to time.

13. Multi-component system otherwise according to one of claims 1 to 12, **characterised in that** the gel time is 180 seconds or less.

14. Multi-component system according to one of claims 1 to 13, **characterised in that** a "sagging" of the corresponding mixture of less than 2 mm is found when 1 g of the mass is applied from a multi-chamber cartridge via a static mixer to a circular marking with a diameter of 0.85 mm on a piece of paper and is placed vertically and for assessment of the sagging at room temperature the distance between the lower edge of the marking and the bottom end of the drop in millimetres is measured.

**15.** Use of a multi-component synthetic resin system that is liquid to paste-like and becomes hardened in the course of use, for fixing fastening elements in a substrate, wherein a multi-component synthetic resin system that without additional heating at ambient temperature without active heating above ambient temperature is liquid to paste-like is, after or during the mixing of its components, introduced into at least one hole, waiting being performed until it has hardened there and then at least one fastening element is driven into the resulting hardened synthetic resin mass, the resulting mass after mixing having a displaceable volume from 0.1 to 40 % by volume, a gel time from 5 to 65 seconds and, before becoming hardened, an average viscosity, determined from the viscosities of the weighted components by averaging, of 1000 Pa·s or less at 23°C - one of the components of the multi-component synthetic resin system having a viscosity of at least 30 Pa.s, thixotropy with a thixotropic index in the range from 4 to 10, and also a cross-linking index from 2.3 to 10, the above-mentioned parameters being determined as described in claim 1.

**16.** Use according to claim 15, wherein the multi-component synthetic resin system in the final, hardened state has a cross-linking density based on a cross-linking index from 2.4 to 5.

**17.** Use according to one of claims 15 or 16, **characterised in that** as the multi-component synthetic resin system one according to one of claims 2 to 14 is used.

**18.** Method of fixing fastening elements, comprising use according to one of claims 15 to 17.

**Revendications**

**1.** Système de résine synthétique à plusieurs composants, fluide à pâteux, durcissant dans le cadre de son utilisation à la température ambiante sans chauffage actif au-delà de la température ambiante, et destiné à la fixation d'un ou de plusieurs éléments de fixation dans un substrat, dans lequel ledit système de résine synthétique à plusieurs composants peut être appliqué dans au moins un trou sans chauffage supplémentaire du système de résine synthétique à plusieurs composants après ou pendant le mélange de ces composants, **caractérisé en ce que** la masse obtenue après le mélange présente

- un volume substituable de 0,1 à 40 % en volume, par des additifs compressibles dans lesquels le volume substituable correspond à celui des espaces creux entourés et/ou dans le cas d'une structure alvéolaire **en ce qu'**un volume défini issu d'une cartouche à plusieurs chambres est comprimé avec une vitesse d'avance de piston constante de 150 mm/min à 23 °C et 50 % d'humidité relative, via un mélangeur statique, dans un bécher pour matière synthétique, et **en ce qu'**après le durcissement, on détermine le volume de l'éprouvette au moyen d'une immersion et pesage et on calcule l'augmentation de volume par rapport au volume de départ ;
- un temps de prise de 5 à 65 secondes, déterminé au moyen de préparations de 5 g par mise à disposition de tous les composants selon un rapport de volume correspondant dans un bécher pour matière synthétique à usage unique et avec mélange manuel avec une spatule en bois, le temps de prise étant alors défini comme la durée entre le début du mélange et l'augmentation rapide de la viscosité, selon laquelle la spatule ne peut plus être déplacée manuellement dans la masse ;
- et avant le durcissement une viscosité moyenne à 23 °C de 1000 Pa.s ou moins, où un des composants du système de résine synthétique à plusieurs composants présente une viscosité au moins égale à 30 Pa.s, où la viscosité moyenne est respectivement mesurée selon DIN EN ISO 2555 avec un viscosimètre de Brookfield DV-III+- avec une aiguille n° 7, à raison de 10 tours/minute (tpm) à 23 °C, et est indiquée en Pa.s ;
- un indice de thixotropie dans la plage de 4 à 10, lequel est déterminé par détermination des viscosités des composants comme dans le paragraphe précédent à 1 et 10 tpm du viscosimètre et formation du coefficient à partir des viscosités ainsi obtenues à 1 et 10 tpm, suivie de la formation de la valeur moyenne pour tous les composants, pondérée en fonction de leur fraction en volume relative dans le mélange obtenu avant une éventuelle expansion suite au mélange des composants ;

et un indice de réticulation de 2,3 à 10, déterminé par l'équation suivante :

$$I_v = \frac{\Sigma(n_i(A_i) \cdot f_i)}{\Sigma(n_i(A_i))} \qquad \text{(Equation A)}$$

dans laquelle

- $A_1$ représente le type du groupe respectif d'un composant prenant part à la polymérisation,
- $n_1$ représente la quantité (nombre) des groupes correspondants de la molécule i du système complet, et
- $f_1$ représente la fonctionnalité respective, éventuellement moyenne en cas de mélange, des molécules réactives en tenant compte du nombre des possibilités de réaction avec un partenaire de réaction potentiel,

où il est respectivement prérequis que pour des systèmes à deux composants ou plus il existe des rapports stoechiométriques des composants, si bien que la quantité des groupes réactifs superflus d'un composant ne doit pas dévier de plus de 10 % de la quantité juste sur le plan stoechiométrique, et qu'une conversion totale est entreprise.

**2.** Système de résine synthétique à plusieurs composants selon la revendication 1, **caractérisé en ce qu'**il présente un indice de réticulation de 2,4 à 5.

**3.** Système de résine synthétique à plusieurs composants selon la revendication 1 ou la revendication 2, **caractérisé en ce qu'**il présente un temps de prise de 5 à 60 secondes et **en ce que** la viscosité moyenne est de 30 à 1000 Pa.s.

**4.** Système de résine synthétique à plusieurs composants selon l'une des revendications 1 à 3, **caractérisé en ce qu'**il présente 5 minutes après le mélange pour la pénétration d'une vis autotaraudeuse 5 x 70 mm, avec une profondeur de pénétration de 40 mm à 45 mm, un couple de pose de 9 Nm ou moins.

**5.** Système de résine synthétique à plusieurs composants selon l'une des revendications 1 à 4 sous la forme d'un système à deux composants, **caractérisé en ce qu'**il s'agit d'un système à base de polyuréthane, à base de polyurée ou à base de polyurée/polyuréthane,

(i) comportant un ou plusieurs di- et/ou polyisocyanantes en tant que composant a) et pour la fabrication des polyuréthanes un ou plusieurs di- et/ou polyols en tant que composant b) ;
(ii) un ou plusieurs di- et/ou polyisocyanantes en tant que composant a) et pour la fabrication de polyurées une ou plusieurs di- et/ou polyamines en tant que composant b) ; ou
(iii) un ou plusieurs di- et/ou polyisocyanantes en tant que composant a) et pour la fabrication de polymères mixtes de polyuéthane/polyurée un ou plusieurs composés amino, hydroxy et/ou amino et hydroxy difonctionnels et/ou polyfonctionnels en tant que composant b).

**6.** Système de résine synthétique à plusieurs composants selon l'une des revendications 1 à 5, **caractérisé en ce que** le volume substituable est obtenu par moussage sur la base de la réaction de l'eau avec des groupes isocyanate avec formation de dioxyde de carbone et/ou des additifs compressibles ou libérant du volume par destruction de corps creux et **en ce que** le volume substituable obtenu est compris entre 0,5 et 40 %.

**7.** Système de résine synthétique à plusieurs composants selon l'une des revendications 1 à 6, **caractérisé en ce que** l'indice de thixotropie est compris dans la plage de 4,5 à 8, et/ou **en ce que** la viscosité est réglée par de l'acide silicique pyrogène non traité ou ayant subi un traitement de surface dans une concentration dans la plage de 0,5 à 10 % dans un, plusieurs ou tous les composants du système de résine synthétique à plusieurs composants.

**8.** Système de résine synthétique à plusieurs composants selon l'une des revendications 1 à 7, **caractérisé en ce que** le nombre des groupes réactifs correspond à un nombre supérieur à 2 mval/g.

**9.** Système de résine synthétique à plusieurs composants selon l'une des revendications 1 à 8, **caractérisé en ce qu'**il s'agit d'un système de polyurétliane dans lequel le rapport molaire entre groupes isocyanate et groupes OH est de 1,1 ou moins.

**10.** Système de résine synthétique à plusieurs composants selon l'une des revendications 1 à 9, exécuté en tant que système à deux composants sous la forme d'une cartouche à deux chambres ou d'une seringue à deux chambres avec mélangeur statique.

**11.** Système de résine synthétique à plusieurs composants selon l'une des revendications 1 à 10, **caractérisé en ce qu'**après le durcissement complet, la force d'extraction est comprise entre 6 et 20 kN, où la force d'extraction est déterminée avec une vis autotaraudeuse, en pointe à son extrémité, de 5 x 70 mm qui est vissée, puis par détermination de la charge de défaillance par un essai d'extraction avec un appui étroit, où le test est réalisé au moyen d'un trépied avec cylindre hydraulique et capteur dynamométrique ayant une vitesse réglée de façon telle que la rupture se fait après environ 5 à 30 secondes.

**12.** Système de résine synthétique à plusieurs composants selon l'une des revendications 1 à 11, **caractérisé en ce que** la masse durcie présente une résistance à la rupture sous charge permanente, où la résistance à la rupture sous charge permanente est déterminée par des essais de résistance **en ce que** les composants du système de résine synthétique à plusieurs composants sont introduits dans un trou percé très propre de dimensions 10 mm de diamètre x 50 mm de profondeur de perçage qui est pratiqué dans du béton, au moyen d'une cartouche à plusieurs chambres correspondante avec mélangeur statique, et après un temps de durcissement de 5 mn, une vis autotaraudeuse de 5 x 70 mm est vissée dans la masse de résine sur 45 mm de profondeur, puis une charge permanente de 20 % de la charge maximale est appliquée par un système de levier et le déplacement de la tête de vis est mesuré en fonction du temps, un système étant considéré comme résistant à la rupture sous charge permanente lorsque le déplacement se fait après un faible déplacement de départ tolérable asymptotiquement par rapport à une valeur de référence tolérable, et qu'il n'existe donc sur la base du temps, aucune aptitude au déplacement illimitée.

**13.** Système à plusieurs composants par ailleurs selon l'une des revendications 1 à 12, **caractérisé en ce que** le temps de prise est de 180 secondes ou moins.

**14.** Système à plusieurs composants selon l'une des revendications 1 à 13, **caractérisé en ce que** l'on trouve un "fléchissement" de moins de 2 mm du mélange correspondant lorsque 1 g de la masse issue d'une cartouche à plusieurs chambres est appliquée sur un papier via un mélangeur statique, sur un repère circulaire de diamètre 0,85 mm, que celui-ci est placé verticalement, et que l'on mesure pour estimer le fléchissement à la température ambiante la distance entre le bord inférieur du repère et l'extrémité inférieure de la goutte, en millimètres.

**15.** Utilisation d'un système de résine synthétique à plusieurs composants, fluide à pâteux, durcissant dans le cadre de son utilisation, pour fixer des éléments de fixation dans un substrat, dans lequel un système de résine synthétique à plusieurs composants, fluide à pâteux sans chauffage supplémentaire à la température ambiante et sans chauffage actif au-delà de la température ambiante, est appliqué dans au moins un trou après ou pendant le mélange de ses composants, dans lequel on attend jusqu'à ce qu'il y durcisse, puis au moins un élément de fixation est introduit dans la masse de résine synthétique durcie obtenue, suite à quoi la masse obtenue après le mélange présente un volume substituable de 0,1 à 40 % en volume, un temps de prise de 5 à 65 secondes et avant le durcissement une viscosité moyenne calculée à partir des viscosités des composants pondérés par moyennage, de 1000 Pa.s ou moins à 23 °C, un des composants du système de résine synthétique à plusieurs composants présentant une viscosité d'au moins 30 Pa.s, une thixotropie avec un indice de thixotropie dans la plage de 4 à 10, ainsi qu'un indice de réticulation de 2,3 à 10, les paramètres précités étant déterminés tel que décrit dans la revendication 1.

**16.** Utilisation selon la revendication 15, dans laquelle le système de résine synthétique à plusieurs composants présente à l'état final durci une densité de réticulation sur la base d'un indice de réticulation de 2,4 à 5.

**17.** Utilisation selon l'une des revendications 15 ou 16, **caractérisée en ce que** l'on utilise alors en tant que système de résine synthétique à plusieurs composants un des systèmes selon l'une des revendications 2 à 14.

**18.** Procédé de fixation d'éléments de fixation contenant une utilisation selon l'une des revendications 15 à 17.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 2207726 A
- US 2110053 A
- DE 102004035567
- DE 19852720
- DE 4438577
- DE 413909
- DE 29617234
- DE 102006036438 A1
- WO 200400214 A
- WO 2004005156 A
- WO 2005000931 A
- WO 02079341 A
- WO 02079293 A